(19) Europäisches Patentamt

European Patent Office

Office européen des brevets

(11) **EP 1 355 716 B1**

(12) **FASCICULE DE BREVET EUROPEEN**

(45) Date de publication et mention
de la délivrance du brevet:
**08.06.2005 Bulletin 2005/23**

(51) Int Cl.⁷: **B01D 53/00**, C01B 31/20

(21) Numéro de dépôt: 02700416.7

(22) Date de dépôt: **25.01.2002**

(86) Numéro de dépôt international:
**PCT/FR2002/000316**

(87) Numéro de publication internationale:
**WO 2002/060561 (08.08.2002 Gazette 2002/32)**

(54) **PROCEDE ET SYSTEME D'EXTRACTION DU DIOXYDE DE CARBONE PAR ANTI-SUBLIMATION EN VUE DE SON STOCKAGE**

VERFAHREN UND VORRICHTUNG ZUR ENTFERNUNG VON KOHLENDIOXID DURCH DESUBLIMATION IN HINBLICK AUF SEINE ENDLAGERUNG

METHOD AND SYSTEM FOR EXTRACTING CARBON DIOXIDE BY ANTI-SUBLIMATION FOR STORAGE THEREOF

(84) Etats contractants désignés:
**AT BE CH CY DE DK ES FI FR GB GR IE IT LI LU MC NL PT SE TR**

(30) Priorité: **30.01.2001 FR 0101232**

(43) Date de publication de la demande:
**29.10.2003 Bulletin 2003/44**

(73) Titulaire: **Armines**
**75272 Paris Cedex 06 (FR)**

(72) Inventeurs:
• **CLODIC, Denis**
**F-75006 Paris (FR)**
• **YOUNES, Mourad**
**F-75013 Paris (FR)**

(74) Mandataire: **Grynwald, Albert et al**
**Cabinet Grynwald**
**94, rue Saint Lazare**
**75009 Paris (FR)**

(56) Documents cités:
DE-A- 3 924 908          DE-A- 4 430 800
DE-A- 19 513 050

• **DATABASE WPI Week 197926 Derwent Publications Ltd., London, GB; AN 1979-47779B XP002180747 & JP 54 061097 A (SHOWA TANSO)**

**EP 1 355 716 B1**

**Description**

La présente invention concerne un procédé et un système permettant l'extraction (la capture) du dioxyde de carbone par anti-sublimation à pression atmosphérique. Elle concerne plus particulièrement un procédé et un système permettant la capture du dioxyde de carbone présent dans les fumées circulant dans les cheminées d'installations de production d'électricité ou de chaleur ou dans les tuyauteries d'échappement de moteurs de propulsion. Cette capture du dioxyde de carbone est effectuée en vue de son stockage.

Les émissions de dioxyde de carbone ou $CO_2$ liées aux combustions, aussi bien des systèmes de chauffage, de production d'énergie électrique ou de propulsion des véhicules, entraînent un accroissement de la concentration atmosphérique en $CO_2$, considéré comme inacceptable dans le long terme. Le Protocole de Kyoto consiste en des engagements des pays signataires pour limiter ces émissions. La sobriété et l'efficacité énergétique ne suffisent pas pour limiter les concentrations de $CO_2$ à des valeurs acceptables. La capture du gaz carbonique et sa séquestration constituent des objectifs indispensables pour le développement économique et le maintien de concentrations atmosphériques à des niveaux limitant le changement climatique.

Le brevet DE 3 924 908 décrit un procédé et system d'extraction du dioxyde de carbone par anti-sublimation.

La présente invention concerne un procédé de capture du gaz carbonique applicable à tout système de combustion. Le procédé selon l'invention présente la caractéristique de ne pas modifier l'efficacité énergétique des moteurs de propulsion ou des turbines de propulsion ou de production d'électricité mettant en oeuvre de tels systèmes de combustion. La capture du $CO_2$ selon le procédé d'anti-sublimation à pression atmosphérique ou proche, se fait à accroissement de consommation énergétique nul ou extrêmement faible. On décrira à titre d'exemple la conception du système pour un moteur thermique automobile.

**Procédé**

L'invention concerne un procédé d'extraction du dioxyde de carbone des fumées provenant de la combustion d'hydrocarbures dans un appareil destiné notamment à la production d'énergie mécanique. Le procédé selon l'invention comprend l'étape de refroidir lesdites fumées à une pression sensiblement égale à la pression atmosphérique à une température telle que le dioxyde de carbone passe directement de l'état vapeur à l'état solide, via un processus d'anti-sublimation

De préférence, l'étape consistant à refroidir lesdites fumées à une pression sensiblement égale à la pression atmosphérique à une température telle que le dioxyde de carbone passe directement de l'état vapeur à l'état solide, via un processus d'anti-sublimation, comprend en outre l'étape de refroidir le mélange d'azote et de dioxyde de carbone en fournissant des frigories au moyen d'une distillation fractionnée d'un mélange de fluides frigorigènes. Cette distillation fractionnée est réalisée à des températures décroissantes, étagées, du mélange de fluides frigorigènes selon un cycle comportant une phase de compression et des phases de condensation et d'évaporation successives.

De préférence, l'étape consistant à refroidir lesdites fumées à une pression sensiblement égale à la pression atmosphérique à une température telle que le dioxyde de carbone passe directement de l'état vapeur à l'état solide, via un processus d'anti-sublimation, est suivi d'une étape de fusion du dioxyde de carbone en enceinte fermée. La pression et la température dans ladite enceinte fermée évoluent jusqu'au point triple du dioxyde de carbone, au fur et à mesure que le mélange de fluides frigorigènes, en se sous-refroidissant, apporte des calories dans ladite enceinte fermée.

De préférence, le mélange de fluides frigorigènes assure successivement :

- la fusion du dioxyde de carbone dans ladite enceinte fermée, et
- l'anti-sublimation du dioxyde de carbone circulant, en circuit ouvert, dans une enceinte symétrique de la précédente.

La fusion et l'anti-sublimation du dioxyde de carbone sont alternativement réalisées dans l'une et l'autre desdites enceintes : l'une étant fermée, l'autre étant ouverte.

De préférence, le procédé selon l'invention comprend en outre l'étape de stocker le dioxyde de carbone sous forme liquide dans un réservoir, notamment amovible.

De préférence, l'étape de stocker le dioxyde de carbone sous forme liquide dans un réservoir, notamment amovible comprend les étapes suivantes :

- l'étape d'aspirer le dioxyde de carbone liquide contenu dans ladite enceinte fermée,
- l'étape de ramener la pression dans ladite enceinte fermée à une pression proche de la pression atmosphérique,
- l'étape de transférer le dioxyde de carbone liquide dans ledit réservoir.

De préférence, le procédé selon l'invention comprend en outre l'étape de rejeter l'azote à l'air extérieur après extractions successives des vapeurs d'eau et de dioxyde de carbone contenues dans lesdites fumées.

De préférence, le procédé selon l'invention comprend en outre l'étape de :

- transférer les frigories contenues dans l'azote rejeté à l'air extérieur aux fumées, et de
- contribuer ainsi au refroidissement desdites fumées.

De préférence, le procédé selon l'invention comprend en outre l'étape de refroidir lesdites fumées jusqu'à la température d'anti-sublimation du dioxyde de carbone à une pression sensiblement égale à la pression atmosphérique en utilisant l'énergie calorifique disponible dans lesdites fumées sans fourniture additionnelle d'énergie.

De préférence, pour utiliser l'énergie calorifique disponible dans lesdites fumées, le procédé selon l'invention comprend en outre les étapes suivantes :

- l'étape de réchauffer puis de vaporiser de l'eau au moyen desdites fumées, pour produire de la vapeur d'eau sous pression,
- l'étape de détendre ladite vapeur d'eau sous pression dans une turbine produisant de l'énergie mécanique ou électrique.

De préférence, le procédé selon l'invention est tel que l'étape de refroidir lesdites fumées à une pression sensiblement égale à la pression atmosphérique à une température telle que le dioxyde de carbone passe directement de l'état vapeur à l'état solide, via un processus d'anti-sublimation, comprend en outre l'étape d'extraire desdites fumées l'eau sous forme liquide à une pression sensiblement égale à la pression atmosphérique.

De préférence, pour extraire desdites fumées tout ou partie de l'eau sous forme liquide à une pression sensiblement égale à la pression atmosphérique on utilise un échangeur à air ou à eau.

De préférence, le procédé selon l'invention comprend en outre l'étape d'extraire l'intégralité des quantités d'eau résiduelles dans lesdites fumées en mettant en oeuvre un échangeur frigorifique et/ou un déshydrateur.

**Système**

L'invention concerne également un système d'extraction du dioxyde de carbone des fumées provenant de la combustion d'hydrocarbures dans un appareil destiné notamment à la production d'énergie mécanique.

Le système selon l'invention comprend des moyens de refroidissement pour refroidir lesdites fumées à une pression sensiblement égale à la pression atmosphérique à une température telle que le dioxyde de carbone passe directement de l'état vapeur à l'état solide, via un processus d'anti-sublimation.

De préférence, les moyens de refroidissement pour refroidir lesdites fumées à une pression sensiblement égale à la pression atmosphérique à une température telle que le dioxyde de carbone passe directement de l'état vapeur à l'état solide, via un processus d'anti-sublimation comprennent en outre un appareil frigorifique à cascade intégrée pour refroidir le mélange d'azote et de dioxyde de carbone en fournissant des frigories au moyen d'une distillation fractionnée, d'un mélange de fluides frigorigènes. La distillation fractionnée du mélange de fluides frigorigènes est réalisée à des températures décroissantes, étagées, selon un cycle comportant une phase de compression et des phases de condensation et d'évaporation successives. L'appareil frigorifique comprend : un compresseur, un condenseur partiel, un réservoir séparateur, des évapo-condenseurs, des évaporateurs de refroidissement de fumées, des échangeurs liquide-vapeur, des évaporateurs d'anti-sublimation, des détendeurs.

De préférence, le système selon l'invention comprend en outre une enceinte fermée parcourue par un circuit dans lequel circule un mélange de fluides frigorigènes. La pression et la température dans ladite enceinte fermée évoluent jusqu'au point triple du dioxyde de carbone, au fur et à mesure que :

- le mélange de fluides frigorigènes, en se sous-refroidissant, apporte des calories dans ladite enceinte fermée,
- ledit dioxyde de carbone passe de l'état solide à l'état liquide.

De préférence, le mélange de fluides frigorigènes assure successivement la fusion du dioxyde de carbone dans ladite enceinte fermée et l'anti-sublimation du dioxyde de carbone circulant en circuit ouvert dans une enceinte symétrique de la précédente. La fusion et l'anti-sublimation du dioxyde de carbone sont alternativement réalisées dans l'une et l'autre desdites enceintes : l'une étant fermée, l'autre étant ouverte.

De préférence, le système selon l'invention comprend en outre des moyens de stockage, notamment un réservoir fixe et/ou amovible pour stocker le dioxyde de carbone sous forme liquide.

De préférence, les moyens de stockage du dioxyde de carbone sous forme liquide dans un réservoir fixe et/ou amovible comprennent en outre des moyens d'aspiration, notamment une pompe pneumatique. Les moyens d'aspiration :

- aspirent le dioxyde de carbone liquide contenu dans ladite enceinte fermée,
- ramènent la pression dans ladite enceinte fermée à une pression proche de la pression atmosphérique,
- transfèrent le dioxyde de carbone liquide dans ledit réservoir.

De préférence, le système selon l'invention comprend en outre des moyens de compression et/ou d'aspiration pour rejeter l'azote à l'air extérieur après extractions successives des vapeurs d'eau et du dioxyde de carbone contenues dans lesdites fumées.

De préférence, le système selon l'invention comprend en outre des moyens de transfert pour transférer les frigories contenues dans l'azote rejeté à l'air extérieur aux fumées et contribuer ainsi au refroidissement desdites fumées.

De préférence, le système selon l'invention comprend en outre des moyens de récupération de l'énergie calorifique disponible dans lesdites fumées pour refroidir, sans fourniture additionnelle d'énergie, lesdites fumées jusqu'à la température d'anti-sublimation du dioxyde de carbone à une pression sensiblement égale à la pression atmosphérique.

De préférence, les moyens de récupération de l'énergie calorifique disponible dans lesdites fumées comprennent :

- des moyens de réchauffage, notamment un échangeur, pour réchauffer et vaporiser de l'eau au moyen desdites fumées et pour produire de la vapeur d'eau sous pression,
- des moyens de détente, notamment une turbine, pour détendre ladite vapeur d'eau sous pression et produire de l'énergie mécanique ou électrique.

De préférence, les moyens pour refroidir lesdites fumées à une pression sensiblement égale à la pression atmosphérique à une température telle que le dioxyde de carbone passe directement de l'état vapeur à l'état solide, via un processus d'anti-sublimation comprennent en outre des moyens d'extraction, notamment des échangeurs, pour extraire desdites fumées l'eau sous forme liquide à une pression sensiblement égale à la pression atmosphérique.

De préférence, les moyens d'extraction pour extraire desdites fumées tout ou partie de l'eau sous forme liquide à une pression sensiblement égale à la pression atmosphérique comprennent un échangeur à air ou à eau.

De préférence, pour extraire l'intégralité des quantités d'eau résiduelles dans lesdites fumées, les moyens d'extraction comprennent un échangeur frigorifique et/ou un déshydrateur.

**Description générale du procédé et du système selon l'invention.**

On va maintenant décrire, de manière générale, une variante de réalisation de l'invention. Les gaz d'échappement, appelés aussi fumées, sont composés typiquement de dioxyde de carbone ($CO_2$), de vapeur d'eau ($H_2O$) et d'azote ($N_2$). On trouve aussi des composants en traces comme le CO, les NOx, des hydrocarbures imbrûlés, etc. (l'ensemble des gaz en trace dans les fumées représentent des teneurs généralement inférieures à 1 à 2 %).

Le tableau 1 présente les compositions molaires et massiques typiques des fumées à l'échappement d'un moteur de combustion.

Tableau 1

|  | $CO_2$ | $H_2O$ | $N_2$ |
|---|---|---|---|
| Composition molaire (%) | 12,7 | 13,7 | 73,6 |
| Composition massique(%) | 19,5 | 8,6 | 71,9 |

Selon le procédé de la présente invention, ces fumées sont refroidies à la fois pour récupérer de l'énergie mécanique et abaisser leurs températures un peu au-dessus de la température ambiante. Elles sont ensuite refroidies par un cycle frigorifique à température progressivement basse pour permettre l'anti-sublimation du $CO_2$ à une température qui se situe vers - 80 °C et à une pression qui est de l'ordre de la pression atmosphérique.

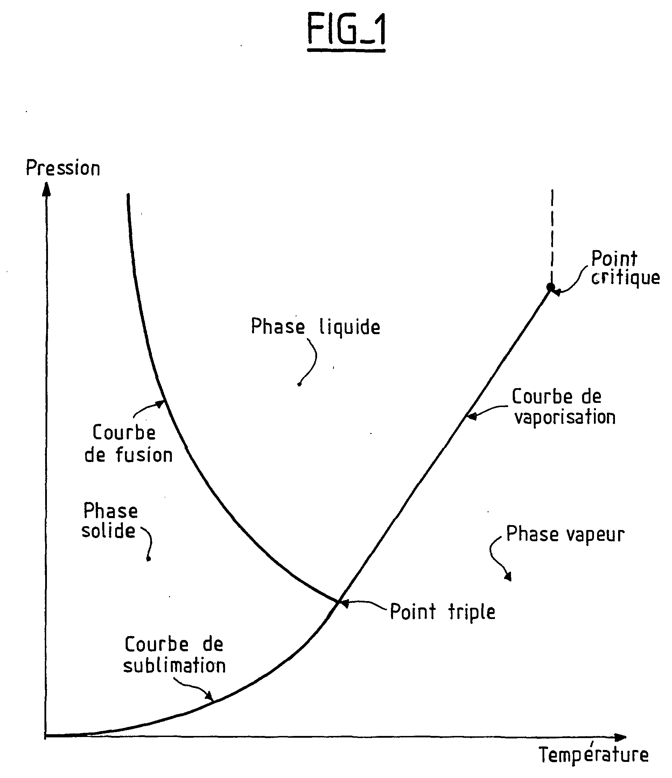

Le terme anti-sublimation désigne ici un changement de phase direct gaz / solide qui se produit quand la température du gaz concernée est au-dessous de celle du point triple. La figure 1 rappelle le schéma de coexistence des phase solide, liquide et vapeur dans le diagramme pression température. Ce diagramme vaut pour tout corps pur. Au-dessous du point triple, les évolutions se font directement entre la phase solide et la phase vapeur. Le passage du solide à la vapeur s'appelle la sublimation. Il n'existe pas de terme communément employé pour désigner le passage inverse. Le terme anti-sublimation a été utilisé, dans la présente description, pour désigner le passage direct de la phase vapeur à la phase solide.

Les données thermodynamiques sur les fumées montrent que l'énergie disponible de 900 °C à 50 °C est un peu supérieure à 1 000 kJ / kg. L'exemple décrit montre qu'il est possible de convertir 34 à 36 % de cette énergie thermique en énergie mécanique par un cycle simple de turbine à vapeur ce qui, en prenant un rendement d'alternateur de 0,9, permet de récupérer de 30,5 à 32,5 % d'énergie électrique.

Le système selon l'invention est constitué d'une part d'un dispositif producteur d'énergie permettant la transformation d'énergie thermique en énergie mécanique et/ou électrique et d'un dispositif consommateur d'énergie constitué par un appareil frigorifique conçu en cascade intégrée. Les gaz d'échappement évoluent thermiquement d'environ + 900°C à - 90 °C. Au cours de ce refroidissement, les gaz produisent de l'énergie de 900 °C à environ 50 °C, puis consomment de l'énergie de la température ambiante (par exemple 40 °C) jusqu'à - 90 °C. L'exemple décrit montre que l'énergie disponible est significativement supérieure à l'énergie consommée et permet ainsi, successivement, d'extraire des fumées la vapeur d'eau, puis le $CO_2$, en rejetant à l'atmosphère simplement de l'azote et les gaz en trace dont les températures de rosée sont inférieures à - 90 °C.

La taille de la turbine à vapeur dépend du débit de fumée à traiter. Pour un moteur thermique d'automobile, il s'agit d'une petite turbine produisant une énergie électrique de l'ordre de 3 à 30 kW, selon la puissance et le régime de fonctionnement du moteur thermique lui-même. La vaporisation de l'eau du circuit producteur d'énergie mécanique est effectuée par échange entre un circuit à eau fermé sous pression et la tuyauterie d'échappement. En effet, l'extraction de l'énergie thermique des gaz d'échappement par un circuit à eau permet de limiter la perturbation mécanique sur les gaz d'échappement que provoquerait, par exemple, une turbine à gaz fonctionnant directement sur les fumées. Il est connu que les paramètres de fonctionnement des moteurs diesel ou à essence sont fortement perturbés par les modifications de la pression à l'échappement. Si ces modifications de la pression à l'échappement sont modifiées de manière significative, elles ont pour effet de diminuer l'efficacité énergétique des moteurs. La conception à contre courant de l'échangeur et le très grand gradient de température le long du circuit des fumées permet de réchauffer et de vaporiser l'eau du circuit de production d'énergie mécanique. Dans le cas de l'exemple décrit, la température de condensation est égale à 40 °C. Cette température de 40 °C correspond aux conditions typiques été d'un condenseur à air.

Cette eau est réchauffée jusqu'à une température de saturation variant entre 310 et 340 °C, à ces températures correspond une pression de saturation dans le bouilleur variant entre 99 bar et 145 bar environ. Le niveau de pression est ajusté en fonction des conditions de fonctionnement du moteur. Pour ajuster au mieux le niveau de pression, on modifie le débit d'eau à partir de la mesure de la température des gaz d'échappement à l'entrée et/ou à la sortie de l'échangeur. Le débit des fumées est très variable mais est connu par la connaissance du régime moteur et du débit de carburant. Ces données sont disponibles à la fois par le compte tour moteur et l'électronique de contrôle de l'injection de carburant. Ces données permettent de prévoir la gamme de débit d'eau à faire circuler dans le circuit de récupération d'énergie, la pression dans le circuit d'eau étant ajustée en fonction de la température des gaz d'échappement à l'entrée et/ou à la sortie de l'échangeur.

A cette pression d'ébullition, le liquide est donc transformé en vapeur. La vapeur est elle-même ensuite surchauffée jusqu'à des températures typiques de 400 °C à 550 °C en fonction du niveau de température disponible des gaz d'échappement. Puis la vapeur est détendue dans le corps de la turbine. Il est ainsi possible d'extraire de l'énergie mécanique à partir des fumées. La turbine peut entraîner un alternateur électrique, un volant d'inertie ou même directement le compresseur du système frigorifique. La version d'entraînement d'un alternateur électrique donne plus de souplesse selon les différents profils de mission d'un moteur thermique d'un véhicule.

Les données ci-après évaluent les quantités d'énergie mécaniques disponibles dans le cas de deux fonctionnements du cycle.

Dans un premier cas, la température de condensation est égale à 40 °C et la température d'ébullition est égale à 310 °C. Dans le deuxième cas, la température de condensation est toujours égale à 40 °C, mais la température d'ébullition est égale à 340 °C. D'autre part, la vapeur est surchauffée dans le premier cas à 400 °C, dans le deuxième cas à 500 °C. Les exemples décrits sont choisis pour illustrer différentes conditions d'exploitation des températures des gaz d'échappement et fournir des chiffres typiques de puissances disponibles, exprimées en fonction du débit M de fumées, lui-même exprimé en kg/s. Ils permettent de généraliser le procédé selon l'invention à toute tuyauterie de rejet de fumées à haute température contenant du $CO_2$. La récupération d'énergie sur les fumées les a donc amenées de températures typiques variant entre 750 et 900 °C jusqu'à des températures de l'ordre de 50 à 80 °C.

Les données ci-après fixent les ordres de grandeur des quantités d'énergie mécanique nécessaires pour refroidir les fumées, par un cycle frigorifique, jusqu'à la température d'anti-sublimation du $CO_2$. Avant de parvenir aux échangeurs du dispositif frigorifique, les fumées sont refroidies de 50° C à la température ambiante. L'échange thermique pour refroidir les fumées de 50 °C à la température ambiante s'effectue dans un échangeur à air ou à eau. Selon le niveau de température extérieure et selon les teneurs en composants traces, l'eau contenue dans le débit de fumées est partiellement condensée dans cet échangeur puisque la température de rosée pour des concentrations de l'ordre de 86 grammes d'eau par kg de fumée sèche est de l'ordre de 50 °C. Cependant, compte tenu de la présence de gaz en trace dans les fumées, l'eau peut être acide et présenter des points de rosée spécifiques, supérieurs à ceux de l'eau pure. Les points de rosée sont dans ce cas typiquement compris entre 50 et 100 °C. On a décrit ci-après comment on procède pour condenser la vapeur d'eau sans prendre en compte les gaz en trace dans les fumées qui élèvent la température de rosée.

L'eau condensée peut, selon ces caractéristiques, être soit directement rejetée, soit stockée afin d'être préalablement traitée avant rejet. Au-dessous de la température ambiante, les fumées sont refroidies dans un circuit comportant plusieurs segments d'échange. Elles sont ainsi amenées à une température inférieure à la température d'anti-sublimation du $CO_2$ à pression atmosphérique ou proche de la pression atmosphérique.

Entre l'échangeur à air et le premier échangeur de refroidissement de la cascade intégrée, le débit des fumées M est modifié puisque la vapeur d'eau qui y est contenue est condensée. Dans le cas où les concentrations massiques sont respectivement égales à :

$$CO_2 = 19,5\%, \ H_2O = 8,6 \% \ et \ N_2 = 71,9 \%,$$

le débit des fumées M est sensiblement égal au débit anhydre (en négligeant les concentrations des gaz en trace), soit :

$$M_{N2+CO2} = 0,914 \ M.$$

C'est ce nouveau débit anhydre $M_{N2+CO2}$ qui poursuit son refroidissement dans les différents échangeurs du système frigorifique avant de parvenir aux deux évaporateurs d'anti-sublimation. Les deux évaporateurs d'anti-sublimation ont un fonctionnement alternatif. Les fumées et le fluide frigorigène passent alternativement sur l'un ou l'autre des deux évaporateurs.

Pendant la phase d'anti-sublimation le givre de $CO_2$ se fixe sur les parois externes du circuit de l'échangeur situé dans l'évaporateur d'anti-sublimation. Ce dépôt crée progressivement un obstacle à la circulation des fumées froides. Après un certain temps de fonctionnement sur cet évaporateur, les débits de fumées sur la partie externe de l'échangeur et les débits de fluide frigorigène à l'intérieur de l'échangeur sont respectivement basculés sur l'évaporateur symétrique. Dans ce second évaporateur, le fluide frigorigène s'évapore à l'intérieur de l'échangeur et le $CO_2$ se dépose sur la surface externe de celui-ci. Pendant ce temps, le premier évaporateur n'est plus le siège d'une évaporation, la température remonte dans le premier évaporateur. Cette remontée en température est accélérée en faisant circuler le frigorigène liquide avant détente, dans l'échangeur du premier évaporateur. Le $CO_2$ solide se réchauffe de - 78,5 °C, qui est la température d'équilibre de la phase solide et gazeuse à la pression atmosphérique, à - 56,5 °C et 5,2 bar qui sont les caractéristiques pression / température du point triple où coexistent donc les trois phases solide, liquide et gazeuse. Le $CO_2$ solide fond, c'est-à-dire passe de la phase solide à la phase liquide. La pression dans cet échangeur s'élève avec la remontée en température.

Une fois le $CO_2$ entièrement en phase liquide, il est transféré par pompe dans un réservoir isolé thermiquement. La pompe est aussi apte à aspirer le gaz résiduel, notamment du $CO_2$. Il est ainsi possible de ramener la pression à l'intérieur de l'évaporateur d'anti-sublimation de 5, 2 bar à une pression proche de la pression atmosphérique, afin que les fumées puissent à nouveau y pénétrer.

Il est alors possible d'effectuer le cycle suivant et d'effectuer une anti-sublimation du $CO_2$ contenu dans les fumées froides sur les parois de l'évaporateur. Ce dernier est de nouveau alimenté en fluide frigorigène. Le cycle se poursuit, ainsi de suite, alternativement sur les deux évaporateurs basse température en parallèle.

Le procédé selon l'invention, qui met en oeuvre une anti-sublimation, est avantageux par rapport au procédé qui consiste à passer de la phase gazeuse à la phase $CO_2$ liquide. En effet, pour passer directement de la phase gazeuse à la phase liquide, il faut augmenter la pression des fumées, au moins jusqu'à 5, 2 bar et abaisser leur température jusqu'à - 56,5°C. En pratique ce procédé implique d'abaisser la température des fumées jusqu'à 0 °C pour éliminer l'eau puis de comprimer le mélange d'azote et de $CO_2$ jusqu'au moins 6 bar. Lors de cette compression, le mélange d'azote et de $CO_2$ va se réchauffer jusqu'à 120 °C . Il va falloir de nouveau le refroidir de 120 °C jusqu'à - 56,5°C. Ce procédé implique en outre une compression en pure perte de l'azote jusqu'à 5,2 bar.

Le dispositif frigorifique met en oeuvre un principe de refroidissement, en soi connu, dit en cascade intégré. Le dispositif frigorifique selon l'invention présente toutefois des traits techniques spécifiques qui seront ci-après décrits. En effet pour refroidir les fumées, sur un écart de température important allant de la température ambiante à - 90 °C, au moyen d'un appareil frigorifique simple à réaliser, ne comprenant qu'un seul compresseur, le procédé selon l'invention met en oeuvre un mélange de fluides frigorigènes. L'appareil frigorifique selon l'invention comprend un seul compresseur, deux évapo-condenseurs intermédiaires et les deux évaporateurs d'anti-sublimation basse température en parallèle précédemment décrits. Les évapo-condenseurs intermédiaires permettent à la fois la distillation du mélange de fluides frigorigènes et le refroidissement progressif du débit des fumées.

Selon les conditions climatiques et la teneur en composants traces, la vapeur d'eau résiduelle contenue dans les fumées est condensée soit totalement, soit partiellement, dans l'échangeur de refroidissement à air ou à eau ci-dessus décrit. Si ce n'est pas le cas, l'eau est condensée de manière complémentaire dans le premier échangeur de l'appareil frigorifique où la température est légèrement supérieure à 0 °C et où le temps de séjour est suffisant pour permettre cette condensation.

Les mélanges de fluides frigorigènes permettant d'effectuer un cycle peuvent être des mélanges ternaire, quaternaire ou à cinq composants. Les mélanges décrits intègrent les contraintes du Protocole de Montréal qui interdit la production et, à terme, l'utilisation des gaz frigorigènes contenant du chlore. Ceci implique qu'aucun CFC (Chloro-fluoro-carbure), ni H-CFC (Hydro-Chloro-Fluoro-carbure) n'est retenu dans les composants utilisables, bien que plusieurs de ces fluides soient fonctionnellement tout à fait intéressants pour être utilisés comme fluides de travail dans une cascade intégrée. Le Protocole de Kyoto impose aussi des contraintes sur les gaz à fort Potentiel de Réchauffement Global (GWP Global Warming Potential). Même s'ils ne sont pas interdits à l'heure actuelle, de préférence, selon l'invention, on utilise des fluides dont le GWP est le plus faible possible. Les mélanges utilisables dans la cascade intégrée selon l'invention, pour effectuer la capture du $CO_2$ dans les fumées, sont indiqués ci-dessous.

- Les mélanges ternaires

Les mélanges ternaires peuvent être des mélanges de Méthane/$CO_2$/R-152a, soit, en adoptant la nomenclature normalisée (ISO 817) des fluides frigorigène, des mélanges R-50/R-744/R-152a. Il est possible de remplacer le R-152a par du butane R-600 ou de l'isobutane R-600a

- Les mélanges quaternaires

Les mélanges quaternaires peuvent être des mélanges :

de R-50/R-170/R-744/R-152a, ou
de R-50/R-170/R-744/R-600, ou
de R-50/R-170/R-744/R-600a.

Le R-50 peut aussi être remplacé par le R-14 mais son GWP est très élevé (6500 kg équivalent $CO_2$).

- Les mélanges à cinq composants

Les mélanges à 5 composants peuvent être réalisés en choisissant 5 de ces composants dans la liste des 8 fluides suivants : R-740, R-50, R-14, R-170, R-744, R-600, R-600a, R-152a dans des proportions adéquates avec des températures critiques progressivement étagées, ces températures critiques étant présentées au tableau 2. On citera à titre d'exemples les mélanges suivants :

de R-50/R-14/R-170/R-744/R-600, ou
de R-740/R-14/R-170/R-744/R-600 ou
de R-740/R-14/R-170/R-744/R-600a ou
de R-740/R-14/R-170/R-744/R-152a ou
de R-740/R-50/R-170/R-744/R-152a, le R-740 étant l'argon.

Le tableau 2 donne les caractéristiques thermochimiques principales et les dénominations de ces fluides.

Tableau 2

| Corps Dénomination chimique et normalisée (ISO817) | Formule chimique | Tcritique (°C) | Pcritique (bar) | masse molaire (g/mole) |
|---|---|---|---|---|
| R-740 Argon | A | - 122,43 | 48,64 | 9,94 |
| R-50 Méthane | $CH_4$ | - 82,4 | 46,4 | 6,04 |
| R-14 Tétrafluorométhane | $CF_4$ | - 45,5 | 37,4 | 8,01 |
| R-744 Dioxyde de carbone | $O_2$ | 1,01 | 3,77 | 4,01 |
| R-170 : Ethane | $_2H_6$ | 2,2 | 8,9 | 0,06 |
| R-152a Difluoroéthane | $HF_2-CH_3$ | 13,5 | 4,9 | 6,05 |
| R-600a Isobutane ou 2-méthylpropane | $CH_3)_3\ CH$ | 35 | 6,47 | 8,12 |
| R-600 n-Butane | $H_4H_{10}$ | 52 | 7,97 | 8,12 |

Les deux évapo-condenseurs intermédiaires et les évaporateurs d'anti-sublimation composent les trois étages de température de la cascade intégrée. Ces trois étages fonctionnent tous à la même pression puisqu'ils sont tous raccordés à l'aspiration du compresseur, mais les températures moyennes dans ces trois étages sont typiquement de l'ordre de - 5 °C, - 30 °C et - 90 °C puisqu'il faut un écart de température entre le débit de frigorigènes circulant dans l'autre tuyauterie de chacun des échangeurs.

Les débits du mélange de fluide frigorigène dans les trois "étages" de la cascade intégrée dépendent de la proportion des composants dans les mélanges de fluides frigorigènes. Il existe donc un lien entre composition et niveaux de températures de la cascade.

Les données ci-après, fournies à titre d'exemple, concernent un appareil frigorifique à cascade intégrée mettant en oeuvre un mélange de fluides frigorigènes à cinq composants dont la composition massique est la suivante :

- R-50 1%
- R-14 3%
- R-170 19%
- R-744 27%
- R-600 50%.

La proportion entre composants inflammables et non inflammables est telle que le mélange soit un mélange de sécurité non inflammable. La température critique de ce mélange est de 74,2 °C et sa pression critique de 50 bar.

Les proportions des composants dont la température critique est la plus élevée, ici le R-600 et le R-744, sont majoritaires dans le mélange car leur évaporation dans les deux étages intermédiaires permet d'effectuer la distillation des composants à basse température critique. Les composants à basse température critique peuvent alors s'évaporer à basse température dans l'évaporateur d'anti-sublimation qui est un évaporateur double, fonctionnant en alternance sur l'une ou l'autre de ses tuyauteries parallèles.

De préférence, les échangeurs dans la cascade sont des échangeurs à contre-courant. Ils permettent d'utiliser les très grands écarts de température entre les entrées et les sorties. Ils permettent aussi les récupérations thermiques entre phases liquide et vapeur à températures différentes.

Le débit de fumées anhydre, $M_{N2+CO2}$, après passage sur l'évaporateur d'anti-sublimation est réduit au débit d'azote, $M_{N2}$, qui représente 0,719 du débit initial M. Ce débit d'azote, dont la température se situe à - 90 °C, circule à contre courant du tube des fumées pour participer au refroidissement du débit de fumées anhydre $M_{N2+CO2}$, puis du débit de fumées total M. La participation du débit d'azote sortant de l'évaporateur d'anti-sublimation au refroidissement des fumées intervient jusqu'à ce que la température de l'azote soit remontée au niveau de la température ambiante. La pression du débit d'azote $M_{N2}$ est égale à 73% de la pression initiale du débit M, compte tenu des captures successives de la vapeur d'eau et des vapeurs de $CO_2$. La surpression nécessaire à la circulation est réalisée par exemple par un compresseur d'air dont le débit injecté dans un venturi permet l'extraction du débit d'azote.

Une autre conception consiste à comprimer le débit total en sortie de l'échangeur de refroidissement à air afin de permettre une légère surpression par rapport à la pression atmosphérique tout le long du circuit de circulation des fumées et jusqu'à sa mise à l'air.

**Description détaillée du procédé et du système selon l'invention.**

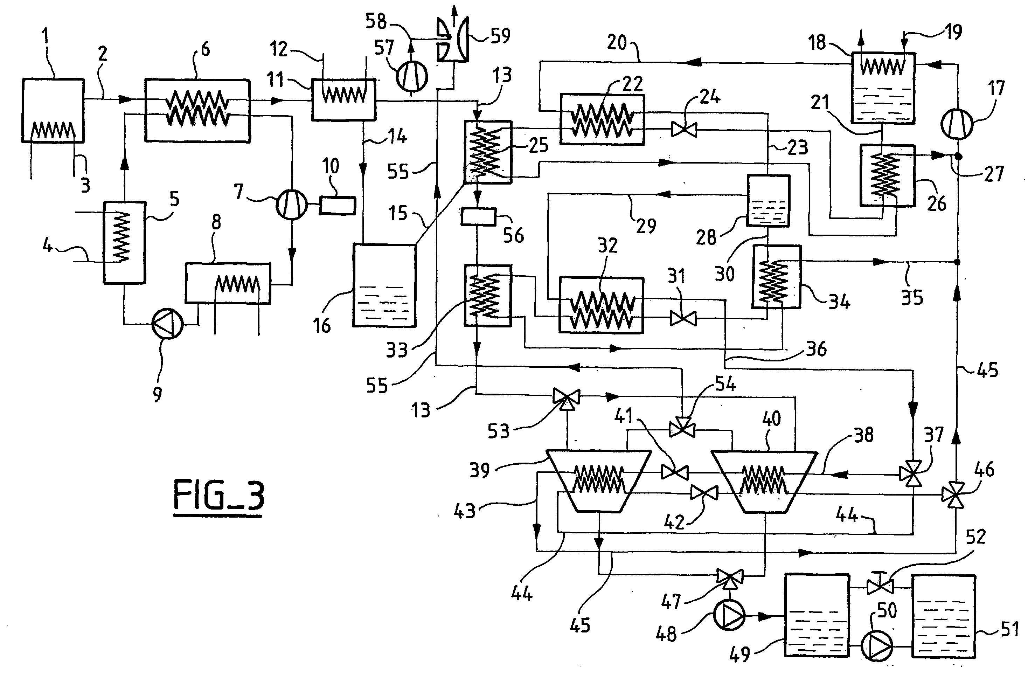

D'autres caractéristiques et avantages de l'invention apparaîtront à la lecture de la description d'une variante de réalisation de l'invention, donnée à titre d'exemple indicatif et non limitatif et de la figure 3 qui représente une vue schématique d'une variante de réalisation d'un système permettant de capturer le dioxyde de carbone par anti-sublimation.

On va maintenant décrire la figure 3. Les références numériques sont celles de la figure 3.

Le tableau ci-après précise le système de références numériques employé. Il explicite le sens des termes techniques identiques portant des références numériques différentes.

Nomenclature des références numériques de la figure 3

| Groupe nominal | Références |
|---|---|
| Moteur thermique | 1 |
| Tuyauterie de sortie du moteur thermique | 2 |
| Circuit de refroidissement du moteur thermique | 3 |
| Circuit de récupération d'énergie du moteur | 4 |
| Echangeur de récupération d'énergie thermique du moteur | 5 |
| Premier échangeur de refroidissement des fumées | 6 |
| Turbine | 7 |
| Condenseur à air | 8 |
| Pompe | 9 |
| Alternateur | 10 |
| Echangeur de refroidissement des fumées | 11 |
| Circuit de refroidissement | 12 |
| Tuyauterie de sortie des fumées de l'échangeur 11 | 13 |
| Tuyauterie d'évacuation des condensats | 14 |
| Tuyauterie d'évacuation d'eau du premier (n° 1) évaporateur refroidisseur de fumées | 15 |
| Réservoir collecteur d'eau | 16 |
| Compresseur frigorifique | 17 |
| Condenseur partiel | 18 |
| Circuit de refroidissement du condenseur frigorifique | 19 |
| Tuyauterie | 20 |
| Tuyauterie | 21 |
| Evapo-condenseur n° 1 | 22 |
| Tuyauterie | 23 |
| Détendeur | 24 |
| Premier (n° 1) évaporateur refroidisseur de fumées | 25 |
| Echangeur liquide-vapeur n° 1 | 26 |
| Tuyauterie | 27 |
| Réservoir séparateur | 28 |
| Tuyauterie sortie gaz | 29 |

(suite)

| Groupe nominal | Références |
|---|---|
| Tuyauterie | 30 |
| Détendeur | 31 |
| Evapo-condenseur n° 2 | 32 |
| Evaporateur refroidisseur de fumées n° 2 | 33 |
| Echangeur liquide vapeur n° 2 | 34 |
| Tuyauterie | 36 |
| Vanne 3 voies | 37 |
| Tuyauterie | 38 |
| Evaporateurs d'anti-sublimation n° 1 | 39 |
| Evaporateurs d'anti-sublimation n° 2 | 40 |
| Détendeur n° 1 | 41 |
| Détendeur n° 2 | 42 |
| Tuyauterie | 43 |
| Tuyauterie | 44 |
| Tuyauterie de retour de gaz | 45 |
| Vanne 3 voies | 46 |
| Vanne 3 voies | 47 |
| Pompe | 48 |
| Réservoir de stockage | 49 |
| Pompe | 50 |
| Réservoir amovible | 51 |
| Vanne | 52 |
| Vanne 3 voies | 53 |
| Vanne 3 voies | 54 |
| Tuyauterie de mise à l'air d'azote | 55 |
| Déshydrateur | 56 |
| Compresseur à air | 57 |
| Tuyauterie | 58 |
| Venturi | 59 |

Les évolutions thermiques des fumées et leur composition chimique ont été suivies au fur et à mesure qu'elles circulent dans le circuit où elles sont refroidies.

Le débit M des fumées est la somme de quatre débits :

$$M = m_{H2O} + m_{CO2} + m_{N2} + m_{traces},$$

où $m_{H2O}$ désigne le débit de vapeur d'eau,
où $m_{CO2}$ désigne le débit de gaz carbonique,
où $m_{N2}$ désigne le débit d'azote,
où $m_{traces}$ désigne le débit des gaz à l'état de trace.

Les fumées sortent du moteur thermique 1 (du moteur à explosion) par la tuyauterie 2 (tuyauterie de sortie du moteur thermique). Leur température est de 900 °C. L'énergie qui va être cédée par ces fumées dans l'échangeur 6 (premier échangeur de refroidissement des fumées) peut s'exprimer en fonction du débit des fumées M :

$$Q_{ech} = M (h_{s6} - h_{e6})$$

où $h_{s6}$, $h_{e6}$ désignent respectivement les enthalpies des fumées à la sortie et à l'entrée de l'échangeur 6.

Les compositions massiques des fumées à la sortie du moteur thermique 1 sont respectivement égales à :

- $CO_2$ : 19,5 %,
- $H_2O$ : 8,6 %,
- $N_2$ : 71,9 %,

Dans la présente description les gaz en trace ont été négligés.

L'énergie $Q_{ech}$ cédée par les fumées dans l'échangeur 6 est environ égale à 1000 kJ/ kg. La température des fumées à la sortie de l'échangeur 6 est de 50 °C. Il est possible d'exprimer la puissance $P_{ech}$ cédée (exprimée en kW) en fonction du débit des fumées M exprimé en kg/s :

$$P_{ech} = Q_{ech} \, xM = 1000 \text{ kJ/ kg x M kg/s} = 1000 \text{ M en kW.}$$

L'énergie thermique cédée par les fumées dans l'échangeur 6 est transformée de manière connue en soi en énergie mécanique, puis en énergie électrique. Les fumées cèdent leur énergie à l'eau circulant dans l'échangeur 6. Cette eau est successivement réchauffée en phase liquide de 42 °C à 310° C, puis portée à l'ébullition à la pression de saturation à 310 °C, soit à 99 bars (ou 340 °C et 145 bars, deuxième variante de réalisation de l'échangeur 6) et enfin cette eau est surchauffée jusqu'à 400 °C (ou 500 °C, deuxième variante de réalisation de l'échangeur 6). La vapeur surchauffée est détendue dans une turbine 7 qui entraîne dans la variante décrite un alternateur 10. Les vapeurs détendues, partiellement diphasiques après cette détente, sont condensées dans un condenseur 8 (condenseur à air). Le liquide ainsi formé est comprimé par une pompe 9 à la pression de 99 bars, (145 bars, dans le cas de la deuxième variante de réalisation). De manière optionnelle, de l'énergie thermique (non comptabilisée dans les bilans énergétiques décrits) peut être récupérée du circuit de refroidissement 3 du moteur thermique 1. A cet effet, l'échangeur de récupération 5 de l'énergie du circuit de refroidissement 3 du moteur thermique 1 comprend un circuit de récupération 4. Les raccordements entre le circuit de récupération 4 et le circuit de refroidissement 3 du moteur thermique 1 ne sont pas représentés. En été la température de condensation est de 40 °C dans le condenseur à air 8. La température de condensation peut varier typiquement de 10 °C à 65 °C, entre l'hiver et l'été dans les pays les plus chauds. L'énergie récupérable dans le cas d'une température de condensation de la vapeur égale à 10 °C est supérieure à celle récupérée dans le cas d'une température de condensation égale à 65 °C.

Les tableaux 3 et 4 mentionnent, dans le cas de chaque variante de réalisation, les enthalpies de l'eau liquide ou et de l'eau vapeur :

- à l'entrée et à la sortie de l'échangeur 6,
- à la sortie de la turbine 7, et
- à la sortie du condenseur à air 8.

Ces quatre valeurs d'enthalpie sont représentatives du rendement énergétique du circuit de récupération d'énergie. L'échangeur 6, la turbine 7, le condenseur 8 et la pompe 9 sont reliés par des tuyauteries et constituent le circuit de récupération d'énergie thermique des fumées. L'énergie thermique ainsi récupérée est transformée en énergie mécanique.

Un alternateur 10 couplé à la turbine 7 permet de transformer l'énergie mécanique en énergie électrique.

Tableau 3

| | Température (°C) | Pression (bar) | H (enthalpie) (kJ/kg) | S (entropie) (kJ/kg.K) |
|---|---|---|---|---|
| Entrée de l'échangeur 6 | 42,4 | 99 | 177,4 | |
| Sortie de l'échangeur 6 | 400 | 99 | 3098,2 | 6,2183 |

Tableau 3   (suite)

| | Température (°C) | Pression (bar) | H (enthalpie) (kJ/kg) | S (entropie) (kJ/kg.K) |
|---|---|---|---|---|
| Sortie de la turbine 7 | 40 | 0,074 | 1935,9 | 6,2183 |
| Sortie du condenseur 8 | 40 | 0,074 | 167,4 | |

Tableau 4

| Localisations | Température (°C) | Pression (bar) | H (enthalpie) (kJ/kg) | S (entropie) (kJ/kg. K) |
|---|---|---|---|---|
| Entrée de l'échangeur 6 | 43,5 | 145 | 182 | |
| Sortie de l'échangeur 6 | 500 | 145 | 3314,8 | 6,3659 |
| Sortie de la turbine 7 | 40 | 0,074 | 1982,1 | 6,3659 |
| Sortie du condenseur 8 | 40 | 0,074 | 167,4 | |

Les fumées circulent dans l'échangeur 6 à contre courant du débit d'eau. La température des fumées varie de 900 °C à 50 °C tandis que la température de l'eau varie de 40 °C jusqu'à 400 °C dans la première variante et jusqu'à 500 °C dans la deuxième variante. Dans le cas de la première variante, la vaporisation a lieu à 310 °C, sous une pression de 99 bars. Dans le cas de la deuxième, la vaporisation a lieu à 340 °C, sous une pression de 145 bars. L'échangeur 6 est donc à la fois un réchauffeur d'eau et un bouilleur.

Dans le cas de la première variante, lorsque la température à la sortie de l'échangeur 6 est égale 400 °C, lorsque la pression à l'entrée de l'échangeur 6 est égale à 99 bars et lorsque la température de condensation est égale à 40 °C, le tableau n° 3 permet de déterminer l'énergie mécanique, exprimée par débit masse unitaire de l'eau dans le circuit de l'échangeur 6. Pour un rendement mécanique de la turbine 7 de 0,85, l'énergie mécanique est égale à :

$$(3098,2 - 1935,9) \times 0,85 = 988 \text{ kJ/kg}$$

Dans le cas de la deuxième variante, lorsque la température à la sortie de l'échangeur 6 est égale 500 °C, lorsque la pression à l'entrée de l'échangeur 6 est égale à 145 bars et lorsque la température de condensation est égale à 40 °C, le tableau n° 4 permet de déterminer l'énergie mécanique, exprimée par débit masse unitaire de l'eau dans le circuit de l'échangeur 6. Pour un rendement mécanique de la turbine 7 de 0,85, l'énergie mécanique est égale à :

$$(3314,8 - 1982,1) \times 0,85 = 1132,8 \text{ kJ/kg}.$$

Dans le cas de la première variante, l'énergie fournie par le circuit des fumées à l'échangeur 6 est égale à :

$$Q_{ech} = 3098,2 - 177,4 = 2920,8 \text{ kJ/kg}.$$

Dans le cas de la deuxième variante, l'énergie fournie par le circuit des fumées à l'échangeur 6 est égale à :

$$Q_{ech} = 3314,8 - 182 = 3132,8 \text{ kJ/kg}$$

Il a été précédemment exposé que la puissance thermique $P_{ech}$ cédée par les fumées dans l'échangeur 6, en fonction du débit des fumées, est égale à :

$$P_{ech} = 1000 \text{ M, exprimé en kW}.$$

**12**

La puissance mécanique extraite s'exprime en fonction du débit de fumée à partir du rendement du cycle de la turbine :

L'énergie mécanique extraite, référée à ce débit M, revient à exprimer le rendement du cycle de la turbine en fonction de ce débit des fumées soit :

dans le cas 1 : $P_{méca}$ = (988 / 2920,8) x 1000 x M = 338,3 M en kW
dans le cas 2 : $P_{méca}$ = (1132,8 / 3132,8) x 1000 x M = 361,6 M en kW

Dans le cas de la première et de la deuxième variante de réalisation, l'alternateur 10 a un rendement de 0,9. La puissance électrique $P_{élec}$ obtenue grâce au circuit de récupération d'énergie thermique des fumées, est :

dans le cas de la première variante de réalisation égal à : $P_{élec}$ = 304,5 M en kW
dans le cas de la deuxième variante de réalisation égal à : $P_{élec}$ = 325,4 M en kW.

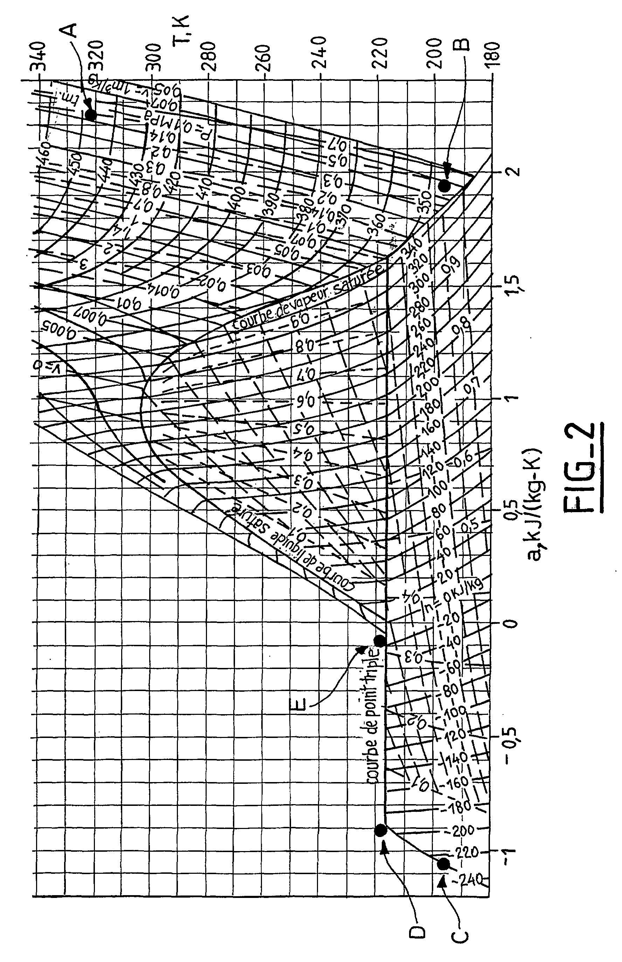

Il est donc possible de récupérer entre 30,5 et 32,5 % d'énergie électrique à partir des fumées, dès que leur température se situe au-dessus de 400 °C.
On va maintenant décrire les phases de refroidissement successives des fumées dans les différents échangeurs. Le refroidissement est un pur refroidissement pour l'azote, un refroidissement et une condensation pour l'eau, un refroidissement et une anti-sublimation pour le $CO_2$. Pour comprendre où sont extraits l'eau liquide et le $CO_2$ solide, puis liquide, il faut suivre à la fois les variations des débits masses de ces trois composants et les variations d'énergie le long du circuit de refroidissement des fumées, c'est-à-dire le long de la tuyauterie 13. Les variations d'énergie sont exprimées pour chacun des composants en kJ/kg et sont des grandeurs additives, de même que les fractions massiques. Les enthalpies du $CO_2$, sont reportées dans le tableau 5 et sur la figure 2 qui représente, de manière connue en soi, un diagramme température-entropie du $CO_2$. Sur ce diagramme,

- les températures sont exprimées en Kelvin
- les entropies sont exprimées en kJ/kg.K.

Le point A est un point représentatif du $CO_2$ à l'entrée du premier (n° 1) évaporateur refroidisseur 25. La pression est de 1 bar, la température est de 50 °C (323 K), l'enthalpie du $CO_2$ est de 450,8 kJ / kg (voir tableau 5).
Le point B est un point représentatif de l'état du $CO_2$ à la sortie de l'échangeur 11, la température est de 40 °C, l'enthalpie est reportée au tableau 5.
Le point C est un point représentatif du $CO_2$ à l'entée de l'évaporateur (n° 1) d'anti-sublimation 39, avant le changement de phase gaz/solide. La pression est de 0,85 bars et la température est de - 72 °C (201 K), l'enthalpie est de 349 kJ / kg (voir tableau 5).
Le point D est un point représentatif du $CO_2$ sur la courbe de solidification complète du $CO_2$ à - 80 °C. La solidification s'opère sur la paroi du tube de l'évaporateur (n° 1) d'anti-sublimation 39 . Le changement de phase complet gaz/solide a demandé une énergie de refroidissement de 568 kJ/kg.
Le point E est un point représentatif du $CO_2$, lors de l'opération de dégivrage par sublimation du $CO_2$ solide dans l'enceinte de l'évaporateur (n° 2) d'anti-sublimation 40. Cette opération entraîne la remontée de la pression par sublimation partielle du $CO_2$ solide ce qui accroît la pression de vapeur jusqu'à 5,2 bars.
Le point F est un point représentatif du $CO_2$, en fin de fusion du $CO_2$, à pression constante 5,2 bars. Le $CO_2$ est donc entièrement liquide au point F.

Tableau 5

| Points | Pression (bar) | Température (°C) (K) | Enthalpie (kJ / kg) |
|--------|----------------|----------------------|---------------------|
| A | 1 | 50 (323K) | 450,8 |
| B | 1 | 40 (313 K) | 442 |
| C | 0,85 | - 72 (201 K) | 349 |
| D | 0,85 | -80 (193 K) | - 228 |
| E | 5,2 | -56,5 (216,6 K) | -190 |
| F | 5,2 | -56,5 (216,6 K) | 0 |

Les bilans énergétiques utilisant les valeurs du tableau 5 sont décrits ci-après.

On va maintenant poursuivre la description de l'évolution du débit des fumées en entrée de l'échangeur de refroidissement des fumées 11 et expliciter le mécanisme de capture de la vapeur d'eau ainsi que la consommation d'énergie qui y est associée.

Le tableau 6 donne les variations de températures, d'enthalpies et de fractions massiques aux entrées sorties des échangeurs et des tronçons de tuyauterie les reliant. De même que la variation du débit en fonction des captures successives des vapeurs d'eau, puis de $CO_2$, en indiquant la quantité d'énergie extraite de chaque échangeur. La tuyauterie 13 des fumées et la tuyauterie 55 de remise à l'air de l'azote sont disposées en contact étroit et sont isolées thermiquement de l'extérieur. Les tronçons des tuyauteries 13 et 55 situés entre les éléments 11, 25, 33, 39 et 40 constituent des échangeurs successifs.

| Echangeurs | Entrées Sorties | T (°C) | Débit fumées | Fraction massique $CO_2$ | Fraction massique $H_2O$ | • (hs - he)J/kg Energie des différents échanges |
|---|---|---|---|---|---|---|
| Echangeur 11 | E 11 | 50 | M | 0.195 | 0,086 | 109 |
| | S 11 | 40 | 0,964 M | | 0,05 | |
| Tuyauterie 55 entre 25 et 11 | 25 | 1 | 0.719 M | 0.195 | | 26,3 |
| | 11 | 40 | | | | |
| Echangeur 25 | E 25 | 36,5 | 0,956 M | 0.195 | 0,042 | 138 |
| | S 25 | 1 | 0,914 M | | 0 | |
| Tuyauterie 55 entre 33et 25 | 33 | -20 | 0.719 M | 0.195 | | 14 |
| | 25 | 1 | | | | |
| Echangeur 33 | E 33 | -14 | 0,914 M | 0.195 | 0 | 5,4 |
| | S 33 | - 20 | 0,914 M | | 0 | |
| Tuyauteries 55 entre 39 ou 40 et 33 | 39 ou 40 | -90 | 0.719 M | | | |
| | 33 | -20 | | | | 7 |
| Evaporateur 39 ou 40 | E 39 (40) | - 72 | 0,914 M | 0.195 | 0 | |
| | Givre $CO_2$ | - 80 | 0,719 M | 0 | 0 | 25,9 |
| | S 39 (40) | - 90 | 0,719 M | 0 | 0 | |

Le refroidissement des fumées dans l'échangeur 11 de 50 à 40 °C avec condensation partielle de l'eau nécessite une puissance de 109 M (kW), dans l'exemple traité l'eau commence à se condenser dans cet échangeur de refroidissement des fumées 11. Pour d'autres conditions de température ou due à la présence de composés traces qui modifient la température de rosée de l'eau, la condensation de l'eau peut commencer dans l'échangeur 6. En effet, la température du point de rosée d'eau se situe vers 50 °C pour une concentration massique d'eau dans les fumées de 8,6 %. Le débit des fumées, en sortie de l'échangeur 11 est égale à 0,964 M. La fraction massique d'eau est passée de 8,6 % à 5 %. L'échangeur 11 est conçu pour permettre une évacuation des condensats d'eau par la tuyauterie 14. La tuyauterie 14 relie l'échangeur 11 au réservoir collecteur d'eau 16.

Les fumées dans la tuyauterie 13 sont refroidies par la tuyauterie 55 de la sortie de l'échangeur 11 jusqu'à l'entrée de l'échangeur 25. Ces tronçons de tuyauteries sont en outre isolés thermiquement de l'extérieur.

Précisons le mode d'échange entre les 2 tuyauteries 13 et 55, elles sont en contacts thermiquement efficaces, pour chaque tronçon de liaison que constitue la tuyauterie 13 entre les échangeurs 11, 25, 33 et 39 ou 40. Ces 3 tronçons constituent de véritables échangeurs où la froideur du débit d'azote dans la tuyauterie 55 refroidit le débit de fumées qui circulent à contre-courant dans la tuyauterie 13. Le tableau 6 indique la variation d'enthalpie du débit d'azote dans la tuyauterie 55 pour chacun des 3 tronçons entre les échangeurs 39 ou 40 et l'échangeur 33, puis entre l'échangeur 33 et l'échangeur 25 et enfin entre l'échangeur 25 et l'échangeur 11. La variation d'enthalpie du débit d'azote de 0,719M (kg/s) est transmise avec une efficacité d'échange de 90% au débit des fumées circulant dans la tuyauterie 13 sur chacun des 3 tronçons d'échangeurs précités. L'énergie cédée par le débit d'azote entre les échangeurs 11 et 25 est de 26,3 M (kW). Elle sert à la fois à condenser une partie de la vapeur d'eau qui est réduite à 4,2 % et à refroidir le débit des fumées jusqu'à 36,5°C à l'entrée de l'échangeur 25.

A la sortie de l'échangeur 25, le débit des fumées est à une température de 1 °C ce qui nécessite une puissance frigorifique de 138 M (kW) dans l'échangeur 25 pour permettre un tel abaissement de la température des fumées et la condensation de la vapeur d'eau restante.

La température des fumées est régulée à 1 °C pour éviter le givre de l'eau contenue dans les fumées. La section et la conception du premier (n° 1) évaporateur refroidisseur 25 permettent d'assurer une déshumidification poussée du débit de fumées. Typiquement, il reste moins de 0,05 % d'eau en masse dans les fumées à la sortie du premier (n° 1) évaporateur refroidisseur 25.

La tuyauterie de fumée 13 est en communication avec la chambre interne du premier (n° 1) évaporateur refroidisseur 25. L'eau extraite des fumées lors de son passage dans le premier (n° 1) évaporateur refroidisseur 25 est récupérée dans la chambre interne. Elle est ensuite transférée au réservoir collecteur d'eau 16 par la tuyauterie 15 d'évacuation d'eau du premier (n° 1) évaporateur refroidisseur 25. Les fumées sortant du premier (n° 1) évaporateur refroidisseur 25 passent dans un déshydrateur 56 qui assure l'assèchement complet des fumées. Le débit massique anhydre des fumées, noté $M_{N2+CO2}$, est égal à 0,914 du débit M sortant du moteur thermique 1. En effet, 8,6% du débit masse ont été capturés sous forme d'eau liquide dans l'échangeur de refroidissement des fumées 11, dans l'échangeur constitué par les tronçons des tuyauteries 13 et 55 en contact, dans le premier (n°1) évaporateur refroidisseur 25 et dans le déshydrateur 56.

Le débit d'azote circulant dans la tuyauterie 55 fournit une puissance frigorifique de 14 M (kW) au tronçon de tuyauterie 13 qui relie l'échangeur 25 à 33 et refroidit le débit résiduel des fumées $M_{N2+CO2}$ d'azote et de $CO_2$ jusqu'à une température de -14°C à l'entrée de l'échangeur 33.

Dans le second (n° 2) évaporateur-refroidisseur 33, une puissance frigorifique de 5,4 M est fournie et le débit résiduel $M_{N2+CO2}$ d'azote et de $CO_2$ est refroidi jusqu'à une température de -20 °C.

Compte tenu du refroidissement entre les tuyauteries 13 et 55, le débit résiduel $M_{N2+CO2}$ pénètre dans l'un des deux évaporateurs d'anti-sublimation (n°1) 39 ou (n° 2) 40 à une température de l'ordre de - 72 °C car la tuyauterie 55 a fourni une puissance frigorifique de 47 M (kW).

La forme et la conception des deux évaporateurs d'anti-sublimation (n°1) 39 ou (n° 2) 40 permettent un temps de séjour long des gaz. Le débit résiduel de fumées $M_{N2+CO2}$ est refroidi jusqu'à anti-sublimation du $CO_2$ ce qui demande une puissance frigorifique de 125,9 M (en kW). Le $CO_2$ est ainsi capturé par anti-sublimation à une température de l'ordre de - 80 °C à la pression de 0,85 bars absolu ou de - 78,6 °C à la pression d'un bar dans l'évaporateur d'anti-sublimation 39 ou 40 tandis que le débit d'azote résiduel noté $M_{N2}$ est refroidi jusqu'à - 90 °C, puis est acheminé vers l'atmosphère à travers la tuyauterie 55 qui échange en contre courant avec la tuyauterie 13.

On détaille l'évolution énergétique du $CO_2$ dans l'évaporateur d'anti-sublimation (n° 1) 39 où il rentre à une température d'environ - 72 °C et une enthalpie de 349 kJ/kg (point C tableau 5 et figure 2). Le changement de phase vapeur - solide complet (anti-sublimation) s'effectue sur le tube de l'évaporateur d'anti-sublimation (n° 1) 39, le $CO_2$ évolue jusqu'au point D (tableau 5 et figure 2), son enthalpie est de - 228 kJ/kg.

La puissance frigorifique, exprimée en kW, en fonction du débit des fumées, est de

$$(349 - (-228)) \times 0,195 \, M = 112,5 \, M$$

Avant détente dans le détendeur (n° 1) 41, le fluide frigorigène passe dans l'évaporateur d'anti-sublimation (n° 2) 40 qui est en phase de dégivrage. Le fluide frigorigène récupère ainsi l'énergie de fusion du $CO_2$. L'énergie récupérable correspond, sur le diagramme de la figure 2, au passage du point D ($CO_2$ solide à 0,85 bars) au point F ($CO_2$ liquide à 5,2 bars). La variation d'enthalpie brute est de 228 kJ/kg. Dans le cas de la variante de réalisation décrite, l'efficacité de transfert des échangeurs est de 90 %. Par conséquent, l'énergie récupérée est égale à 205 kJ/kg. La puissance frigorifique récupérée en fonction du débit total M de fumées est de 40 M, exprimé en kW :

$$205 \times 0,195 \, M = 40 \, M.$$

En tenant compte de la récupération d'énergie du dégivrage du $CO_2$ par le fluide frigorigène liquide, l'anti-sublimation du $CO_2$ à une température d'évaporation de - 90 °C (il faut un écart d'environ 10 °C entre le fluide frigorigène et le $CO_2$ vapeur ou solide pour givrer le $CO_2$) ne nécessite qu'une puissance frigorifique de :

$$(112,5-40) \, M = 72,5 \, M \, \text{(exprimée en kW)}$$

On a vu que les puissances électriques (exprimées en kW) que l'on peut récupérer dans le cas des deux variantes de réalisation précédemment décrites sont respectivement égales à 304,5 M et 325,4 M. Elles sont supérieures à la puissance électrique de compression que doit fournir le compresseur pour produire la puissance frigorifique. En effet, exprimée en kW en fonction du débit de fumée M, la puissance électrique de compression est de l'ordre de 187 M.

On peut valider ce bilan énergétique en procédant à une estimation théorique de la puissance électrique de compression que doit fournir le compresseur pour produire la puissance frigorifique. Pour procéder à cette estimation il faut préalablement rappeler ce que l'on entend par coefficient de performance d'une machine frigorifique. Le coefficient de performance est le rapport de la puissance frigorifique $P_{frig}$ à la puissance électrique fournie par la moto-compresseur $P_{elec.\_Comp}$. :

$$COP = P_{frig} / P_{elec.\_Comp}.$$

Compte tenu du fait que des puissances frigorifiques vont être échangées à différents niveaux de température : - 5° C, - 30 °C, - 90 °C, il est indispensable d'utiliser une loi typique de variation du coefficient de performance en fonction de la température.

La manière la plus simple d'exprimer cette loi est de l'exprimer en fonction du coefficient de performance de Carnot. Le coefficient de performance de Carnot représente la performance idéale des machines frigorifiques et se calcule simplement en fonction des températures de condensation (T cond) et d'évaporation (Tevap) selon la formule :

$$COP_{Carnot} = Tevap / (T\ cond - T\ evap)$$

les températures étant exprimées en Kelvin.

Une loi basée sur l'analyse des machines réelles peut s'exprimer par :

$$COP = (2,15 \times 10^{-3}\ T + 0,025)\ COP_{Carnot}$$

Le tableau 7 ci-après donne les COP suivant les températures d'évaporation.

Tableau 7

| T (°C) | T (K) | $(2,15 \times 10^{-3}\ T + 0,025)$ | COP Carnot | COP |
|--------|-------|-------------------------------------|------------|------|
| - 90 | 183 | 0,42 | 1,4 | 0,59 |
| - 60 | 213 | 0,48 | 2,13 | 1,02 |
| - 40 | 233 | 0,525 | 2,91 | 1,53 |
| - 30 | 243 | 0,547 | 3,47 | 1,9 |
| - 5 | 268 | 0,6 | 5,95 | 3,57 |

Ce tableau permet de calculer la puissance électrique consommée par le compresseur selon le niveau de température auquel la puissance frigorifique est fournie. Les coefficients de performance permettent de calculer la puissance consommée par le compresseur pour fournir la puissance frigorifique (aux différents échangeurs).

La puissance frigorifique fournie à l'échangeur 25, pour refroidir les fumées à 0 °C, est fournie à - 5 °C. Comme la puissance frigorifique à fournir est égale à 138 M (tableau 6) et comme le coefficient de performance est de 3,57 (tableau 7), la puissance électrique consommée par le compresseur est égale à : 138 M /3,57 = 38,6 M en kW.

La puissance frigorifique fournie au deuxième évaporateur refroidisseur de fumées 33 est fournie à - 30 °C. Comme la puissance frigorifique à fournir est égale à 5,4 M (tableau 6) et comme le coefficient de performance est de 1,9 (tableau 7), la puissance électrique consommée par le compresseur est égale à : 5,4/1,9 = 2,8 M en kW.

La puissance frigorifique fournie aux évaporateurs d'anti-sublimation (n°1) 39 ou (n°2) 40 est fournie à - 90 °C. Comme la puissance frigorifique est de 125,9M - 40 M = 85,9 M et comme le coefficient de performance est de 0,59 (tableau 7), la puissance électrique consommée par le compresseur est égale à : 85,9 M / 0,59 = 145,6 M en kW.

La puissance frigorifique nécessaire au refroidissement de l'azote de 50 à - 90°C a été prise en compte dans les calculs de chaque échangeur.

La puissance électrique de compression totale ($P_{comp}$) est donc à fournir uniquement pour les évaporateurs 25 ,33 et 39 ou 40 et est donc égale à :

P$_{comp}$ = 38,6 + 2,8 + 145,6 = 187 M en kW , ainsi que cela a été mentionné précédemment.

La puissance électrique consommée par le compresseur frigorifique en fonction du débit des fumées M est donc de 187 M en kW. Cette puissance est à comparer à la puissance électrique récupérée sur le débit des fumées qui est variable entre 304,5 M et 325,4 M. La puissance électrique du compresseur représente donc de l'ordre de 60% de l'énergie électrique récupérable par le cycle de récupération à vapeur d'eau décrit ci-dessus.

On va maintenant préciser, en se reportant de nouveau à la figure 3, le fonctionnement de l'appareil frigorifique fonctionnant en cascade intégrée. Le compresseur frigorifique 17 aspire le débit masse en phase vapeur d'un des mélanges frigorigènes multi-composants ci-dessus définis. Plus particulièrement, dans le cas de la variante de réalisation qui sera ci-après décrite le mélange est composé de cinq composants dont les pourcentages massiques sont les suivants :

- R-50 (1 %)
- R-14 (3 %)
- R-170 (19 %)
- R-744 (27 %)
- R-600 (50 %).

La pression d'aspiration est de 1,7 bar. La pression de condensation, pour une température de sortie de condensat de 40 °C, est de 22 bar. Le condenseur frigorifique partiel 18 est refroidi par un circuit de refroidissement 19 (le circuit de refroidissement du condenseur frigorifique partiel). Dans le circuit de refroidissement 19 circule de l'eau ou de l'air.

Le condenseur frigorifique partiel 18 est un séparateur de phases liquide et gazeuse du débit total de frigorigène entrant (ci-après désigné Mf). Le débit en phase gaz (ci-après désigné Mtête1) sort en haut (en tête) du condenseur frigorifique partiel 18 par la tuyauterie 20. Le débit liquide (ci-après désigné Mpied1) sort en bas (en pied), par la tuyauterie 21. Les liquides sont drainés en bas du condenseur frigorifique partiel 18 du fait de la gravité.

Le débit liquide (Mpied1) se sous refroidit dans l'échangeur (n° 1) liquidé-vapeur 26. Ce débit (Mpied1) est environ égal à 50 % du débit total de frigorigène (Mf). Le débit liquide (Mpied1) est riche dans les composants les plus lourds, c'est-à-dire ici le R-600 et le R-744, et se détend dans le détendeur 24 à la pression d'évaporation de 1,7 bar. Le débit liquide (Mpied1) détendu s'évapore successivement dans le premier (n° 1) évapo-condenseur 22 puis dans le premier (n° 1) évaporateur refroidisseur de fumées 25 où l'évaporation s'achève. Le débit fluide (Mpied1) ainsi entièrement vaporisé va céder sa froideur dans l'échangeur (n° 1) liquide vapeur 26 puis rejoint le collecteur d'aspiration du compresseur 17 par la tuyauterie 27.

Le débit gazeux (Mtête1), sortant en tête du condenseur partiel 18, représente les autres 50 % du débit total de frigorigène (Mf). Le débit gazeux (Mtête1) va se condenser partiellement dans le premier (n° 1) évapo-condenseur 22. Ce débit (Mtête1) devenu diphasique (liquide-vapeur) à la sortie du premier (n°1) évapo-condenseur 22 va se séparer en phases liquide et vapeur indépendantes dans le réservoir séparateur 28. Le débit phase vapeur (Mtête2) sort en tête du réservoir séparateur 28 par la tuyauterie 29. Le débit liquide (Mpied2) sort en pied du réservoir séparateur 28. Le débit gazeux (Mtête1) sortant en tête du condenseur partiel 18, a été ainsi séparé en deux débits : un débit gazeux (Mtête2) représentant 40 % du débit entrant (Mtête1) et un débit liquide (Mpied2) représentant 60% du débit entrant (Mtête1). Le débit en phase gaz (Mtête2) sortant du réservoir séparateur 28 par la tuyauterie 29 va entièrement se condenser dans le deuxième (n° 2) évapo-condenseur 32. Le débit entièrement liquide (Mtête2) s'évapore alternativement dans les évaporateurs (n°1) ou (n°2) d'anti-sublimation 39 ou 40.

La condensation, dans le deuxième (n° 2) évapo-condenseur 32, du débit en phase gaz (Mtête2) sortant du réservoir séparateur 28 a été effectuée par l'évaporation partielle du débit liquide (Mpied2) sortant en pied du réservoir séparateur 28 et après que ce débit liquide (Mpied2) se soit détendu dans le détendeur 31. Le débit liquide (Mpied2) achève son évaporation dans l'évaporateur refroidisseur de fumées 33. Le débit liquide (Mpied2) entièrement vaporisé cède sa froideur dans le deuxième (n°2) échangeur liquide vapeur 34 puis rejoint le collecteur d'aspiration du compresseur 17 par la tuyauterie 35.

Le débit liquide (Mtête2) passe par la première (n° 1) vanne trois voies 37. Cette vanne est ouverte sur la tuyauterie 38 et donc fermée sur la tuyauterie 44. Le débit liquide (Mtête2) se sous-refroidit dans le deuxième évaporateur (n° 2) d'anti-sublimation 40 qui sert alors d'échangeur de sous-refroidissement lors de sa phase de dégivrage de $CO_2$. Le débit liquide (Mtête2), sous-refroidi, est ensuite détendu dans le premier (n°1) détendeur 41. Puis, il s'évapore dans le premier (n° 1) évaporateur d'anti-sublimation 39.

Le débit de vapeurs de frigorigène (Mtête2) sortant du premier évaporateur (n° 1) d'anti-sublimation 39 passe par la deuxième (n° 2) vanne trois voies 46 et réintègre le compresseur frigorifique 17 via la tuyauterie de retour de gaz 45. Ce débit (Mtête2) représente 20 % environ du débit total de frigorigène (Mf) aspiré par le compresseur frigorifique 17.

Lorsque le fonctionnement du premier évaporateur (n° 1) d'anti-sublimation 39 est alterné avec celui du deuxième évaporateur (n° 2) d'anti-sublimation 40, la première (n° 1) vanne trois voies 37 commute, via la tuyauterie 44, la circulation du fluide frigorigène liquide vers le premier évaporateur (n° 1) d'anti-sublimation 39 où il est sous-refroidi. Le fluide frigorigène se détend ensuite dans le détendeur (n° 2) 42. Il s'évapore ensuite dans le deuxième évaporateur (n° 2) d'anti-sublimation 40 puis réintègre, via la deuxième (n° 2) vanne trois voies 46 et la tuyauterie 45 le compresseur frigorifique 17.

On va maintenant décrire la circulation du fluide frigorigène dans les deux évaporateurs d'anti-sublimation 39 et 40. Ces évaporateurs d'anti-sublimation fonctionnent alternativement. Lorsque l'un est effectivement un évaporateur, l'autre est un échangeur de sous-refroidissement et vice-versa. Dans le cas où l'évaporation s'effectue dans le premier évaporateur (n° 1) d'anti-sublimation 39, la première (n° 1) vanne trois voies 37 est ouverte, le mélange de frigorigène peut circuler dans la tuyauterie 38 mais ne peut pas circuler dans la tuyauterie 44.

Le mélange de frigorigène liquide (Mtête2) après détente dans le détendeur (n°1) 41 s'évapore dans le premier évaporateur (n° 1) d'anti-sublimation 39 à une température commençante d'environ - 100 °C jusqu'à une température de l'ordre de - 70 °C en sortie.

Dans le cas de figure étudié, les fumées provenant du deuxième (n° 2) évaporateur refroidisseur de fumées 33 passent par la quatrième (n° 4) vanne trois voies 53 pour aller dans le premier évaporateur (n° 1) d'anti-sublimation 39. Dans ce cas de figure, les fumées ne vont pas dans le deuxième évaporateur (n° 2) d'anti-sublimation 40.

Ces fumées se refroidissent de leur température d'entrée qui est d'environ - 72 °C jusqu'à la température d'anti-sublimation du $CO_2$ qui est soit égale à - 78,6 °C, soit égale à - 80 °C, selon que la pression dans le premier évaporateur (n° 1) d'anti-sublimation 39 est respectivement de 1 bar abs. ou de 0,85 bar abs. Une fois cette température atteinte, le $CO_2$ se givre, à l'intérieur du premier évaporateur (n° 1) d'anti-sublimation 39, sur la paroi extérieure de la tuyauterie dans laquelle circule le mélange de frigorigène.

Avant de pénétrer dans le premier évaporateur (n° 1) d'anti-sublimation 39, le liquide frigorigène entre aux alentours de - 45 °C dans le deuxième évaporateur (n° 2) d'anti-sublimation 40, qui fonctionne en échangeur de sous-refroidissement. Le fluide frigorigène se sous-refroidit de - 45 °C jusqu'à - 78 °C en début de cycle de dégivrage du $CO_2$ et seulement de - 45 °C jusqu'à - 55 °C en fin de cycle de dégivrage de $CO_2$. Pendant le dégivrage, le $CO_2$ liquide s'accumule en partie basse du deuxième évaporateur (n° 2) d'anti-sublimation 40. Avant de faire basculer le fonctionnement du deuxième évaporateur (n° 2) d'anti-sublimation 40 en mode évaporation et à la fin de la liquéfaction du $CO_2$, la troisième (n° 3) vanne trois voies 47 est ouverte. Il est ainsi possible d'aspirer le $CO_2$ liquide au moyen de la pompe 48 (la pompe d'aspiration du $CO_2$ liquide). La pompe 48 est par exemple une pompe pneumatique électrique permettant d'aspirer aussi bien du liquide que du gaz. La pompe 48 transfère le $CO_2$ liquide dans le réservoir de stockage 49, puis aspire les vapeurs de $CO_2$ mélangées à de l'azote jusqu'à remettre l'ambiance gazeuse du deuxième évaporateur (n° 2) d'anti-sublimation 40 à la pression de fonctionnement, soit 0,85 bar abs., soit 1 bar abs., selon l'option technique choisie pour la circulation des fumées. Pour des raisons pratiques, en particulier pour les véhicules, un réservoir amovible 51 est connecté au réservoir de stockage 49. La pompe 50 (la pompe de remplissage du réservoir amovible) permet le remplissage du réservoir amovible 51 à partir du réservoir de stockage 49. La vanne 52 permet l'équilibrage des pressions entre les deux réservoirs 49 et 51 si nécessaire. Le réservoir amovible 51 permet le transport du $CO_2$ capturé. Un nouveau réservoir amovible mis sous vide remplace celui qui a été rempli.

On va maintenant décrire la circulation de l'azote sortant du premier (n° 1) évaporateur d'anti-sublimation 39. Les vapeurs d'azote passent par la cinquième (n° 5) vanne trois voies 54, puis rejoignent la tuyauterie de mise à l'air de l'azote 55. La cinquième (n° 5) vanne trois voies 54 met en communication, selon le cas, la tuyauterie de mise à l'air de l'azote 55 soit avec le premier (n° 1) évaporateur d'anti-sublimation 39, soit avec le deuxième (n° 2) évaporateur d'anti-sublimation 40.

Lors du dégivrage, la pression remonte par sublimation du $CO_2$ dans les évaporateurs d'anti-sublimation 39 et 40 qui sont alors en circuit fermé. A la température d'équilibre du point triple, la pression est égale à 5,2 bar. A cette pression le $CO_2$ passe de l'état solide à l'état liquide.

Le débit d'azote $M_{N2}$ dans la tuyauterie de mise à l'air de l'azote 55, ne représente plus que 71,9 % du débit masse initial des fumées. La pression de l'azote seul est égale à 0,736 bar, sans tenir compte ni des pertes de charge, ni des gaz en trace.

La tuyauterie 2 de sortie du moteur thermique 1, la tuyauterie de fumées 13 et la tuyauterie de mise à l'air de l'azote 55 sont en communication, elles constituent un même circuit.

L'élimination de l'eau dans l'échangeur de refroidissement de fumées 11, dans le premier (n° 1) évaporateur refroidisseur des fumées 25 et dans le déshydrateur 56, entraînerait une diminution de la pression dans les tuyauteries 2, 13, 55, si celle-ci n'était pas compensée : l'air atmosphérique pénètrerait dans l'appareil frigorifique par la tuyauterie 55 de mise à l'air de l'azote. De même, l'anti-sublimation du $CO_2$ dans les évaporateurs d'anti-sublimation 39 et 40 entraînerait une nouvelle diminution de la pression. Cette baisse de pression doit être compensée pour que l'azote puisse être rejeté à l'atmosphère. La solution représentée à la figure 3 est celle d'un compresseur à air 57 injectant un flux d'air par la tuyauterie 58 (la tuyauterie d'injection du venturi) au col d'un venturi 59 permettant l'aspiration du débit d'azote à une pression de l'ordre de 0,65 bar et interdisant l'entrée d'air dans le système. Cette solution présente également l'intérêt de recréer un mélange d'azote et d'oxygène à la sortie du venturi.

Une autre solution, non représentée sur la figure 3, est de mettre en place un compresseur à faible écart de pression, de type soufflante, à la sortie de l'échangeur de refroidissement des fumées 11, dans la tuyauterie de fumées 13 pour créer la surpression qui permet la remise à l'atmosphère du débit d'azote ou du débit d'azote additionné des composants traces à la sortie de la tuyauterie de mise à l'air d'azote 55.

Si les teneurs des composants traces et en particulier celles de l'oxyde de carbone CO et de certains hydrocarbures légers sont non négligeables, les flux d'azote et des composants traces peuvent être réintégrés dans un mélangeur avec un débit additionnel d'air adéquat pour créer un mélange combustible dit pauvre. La combustion de ce mélange combustible est favorable à la diminution des polluants et à l'accroissement de l'efficacité énergétique d'un moteur thermique conçu à cet effet.

On notera que, pendant le dégivrage du $CO_2$ sur l'échangeur d'anti-sublimation en fonctionnement, la température varie entre - 80 et - 55 °C. Cette variation importante de la température peut être utilisée pour la régulation de l'alternance des deux évaporateurs d'anti-sublimation. En effet, lorsque la température de - 55 °C est atteinte lors du dégivrage du $CO_2$, on peut considérer que le $CO_2$ est passé entièrement en phase liquide. On peut alors enclencher la pompe 48 d'aspiration du $CO_2$ liquide pour le transfert dans le réservoir de stockage 49. Il est alors possible, en mesurant les pressions dans le volume intérieur de l'évaporateur en dégivrage de $CO_2$ d'arrêter le processus de vidage, puis de recommencer le cycle en faisant évaporer le frigorigène dans cet évaporateur d'anti-sublimation préalablement vidé de son $CO_2$ liquide. On notera qu'en début de cycle, lorsque aucun évaporateur n'est givré, le système de compression en cascade intégrée consomme plus d'énergie. En effet, le mélange qui se détend dans l'évaporateur d'anti-sublimation n'est pas sous-refroidi. L'optimisation énergétique prend en compte les temps de fonctionnement les plus probables du moteur, du processus de production d'énergie, etc. pour fixer le rythme des alternances entre les deux évaporateurs.

**Revendications**

1. Procédé d'extraction du dioxyde de carbone des fumées provenant de la combustion d'hydrocarbures dans un appareil destiné notamment à la production d'énergie mécanique ;

   ledit procédé comprenant l'étape de refroidir lesdites fumées à une pression sensiblement égale à la pression atmosphérique à une température telle que le dioxyde de carbone passe directement de l'état vapeur à l'état solide via un processus d'anti-sublimation ;

   ledit procédé étant **caractérisé en ce que**, pour refroidir le mélange d'azote et de dioxyde de carbone :

   - on fournit des frigories au moyen d'une distillation fractionnée, à des températures décroissantes, étagées, d'un mélange de fluides frigorigènes selon un cycle comportant une phase de compression et des phases de condensation et d'évaporation successives.

2. Procédé selon la revendication 1 ; l'étape consistant à refroidir lesdites fumées à une pression sensiblement égale à la pression atmosphérique à une température telle que le dioxyde de carbone passe directement de l'état vapeur à l'état solide via un processus d'anti-sublimation étant suivie :

   - d'une étape de fusion du dioxyde de carbone en enceinte fermée ; la pression et la température dans ladite enceinte fermée évoluant jusqu'au point triple du dioxyde de carbone, au fur et à mesure que le mélange de fluides frigorigènes, en se sous-refroidissant, apporte dans ladite enceinte des calories.

3. Procédé selon la revendication 2 ; ledit procédé étant tel que le mélange de fluides frigorigènes assure successivement la fusion du dioxyde de carbone dans ladite enceinte fermée et l'anti-sublimation du dioxyde de carbone circulant en circuit ouvert dans une enceinte symétrique de la précédente ; la fusion et l'anti-sublimation du dioxyde de carbone étant alternativement réalisées dans l'une et l'autre desdites enceintes, l'une fermée, l'autre ouverte.

4. Procédé selon l'une quelconque des revendications 2 ou 3 ; ledit procédé comprenant en outre :

   - l'étape de stocker le dioxyde de carbone sous forme liquide dans un réservoir, notamment amovible.

5. Procédé selon la revendication 4 ; ledit procédé étant tel que l'étape de stocker le dioxyde de carbone sous forme liquide dans un réservoir, notamment amovible comprend les étapes suivantes :

   - l'étape d'aspirer le dioxyde de carbone liquide contenu dans ladite enceinte fermée,

- l'étape de ramener la pression dans ladite enceinte fermée à une pression proche de la pression atmosphérique,
- l'étape de transférer le dioxyde de carbone liquide dans ledit réservoir.

6. Procédé selon l'une quelconque des revendications 1 à 5 ; ledit procédé comprenant en outre :

- l'étape de rejeter l'azote à l'air extérieur après extractions successives des vapeurs d'eau et de dioxyde de carbone contenues dans lesdites fumées.

7. Procédé selon la revendication 6 ; ledit procédé comprenant en outre :

- l'étape de transférer les frigories contenues dans l'azote rejeté à l'air extérieur aux fumées et de contribuer ainsi au refroidissement desdites fumées.

8. Procédé selon l'une quelconque des revendications 1 à 7 ; ledit procédé comprenant en outre :

- l'étape de refroidir lesdites fumées jusqu'à la température d'anti-sublimation du dioxyde de carbone à une pression sensiblement égale à la pression atmosphérique en utilisant l'énergie calorifique disponible dans lesdites fumées sans fourniture additionnelle d'énergie.

9. Procédé selon la revendication 8 ; ledit procédé étant tel que pour utiliser l'énergie calorifique disponible dans lesdites fumées ledit procédé comprend en outre les étapes suivantes :

- l'étape de réchauffer puis de vaporiser de l'eau au moyen desdites fumées, pour produire de la vapeur d'eau sous pression,
- l'étape de détendre ladite vapeur d'eau sous pression dans une turbine produisant de l'énergie mécanique ou électrique.

10. Procédé selon l'une quelconque des revendications 1 à 9 ; ledit procédé étant tel que l'étape de refroidir lesdites fumées à une pression sensiblement égale à la pression atmosphérique à une température telle que le dioxyde de carbone passe directement de l'état vapeur à l'état solide via un processus d'anti-sublimation comprend en outre :

- l'étape d'extraire desdites fumées l'eau sous forme liquide à une pression sensiblement égale à la pression atmosphérique.

11. Procédé selon la revendication 10 ; ledit procédé étant tel que pour extraire desdites fumées tout ou partie de l'eau sous forme liquide à une pression sensiblement égale à la pression atmosphérique on utilise un échangeur à air ou à eau.

12. Procédé selon la revendication 11 ; ledit procédé comprenant en outre :

- l'étape d'extraire l'intégralité des quantités d'eau résiduelles dans lesdites fumées en mettant en oeuvre un échangeur frigorifique et/ou un déshydrateur.

13. Système d'extraction du dioxyde de carbone des fumées provenant de la combustion d'hydrocarbures dans un appareil destiné notamment à la production d'énergie mécanique ;
ledit système comprenant des moyens de refroidissement pour refroidir lesdites fumées à une pression sensiblement égale à la pression atmosphérique à une température telle que le dioxyde de carbone passe directement de l'état vapeur à l'état solide via un processus d'anti-sublimation ;
ledit système étant **caractérisé en ce que** :

lesdits moyens de refroidissement pour refroidir lesdites fumées à une pression sensiblement égale à la pression atmosphérique à une température telle que le dioxyde de carbone passe directement de l'état vapeur à l'état solide via un processus d'anti-sublimation comprennent en outre un appareil frigorifique à cascade intégrée (18, 22, 25, 26, 28, 32, 33, 34, 39, 40) pour refroidir le mélange d'azote et de dioxyde de carbone en fournissant des frigories au moyen d'une distillation fractionnée, à des températures décroissantes, étagées, d'un mélange de fluides frigorigènes selon un cycle comportant une phase de compression (17) et des phases de condensation et d'évaporation successives ;
ledit appareil frigorifique comprenant :

- un compresseur (17),
- un condenseur partiel (18),
- un réservoir séparateur (28),
- des évapo-condenseurs (22, 32),
- des évaporateurs de refroidissement de fumées (25, 33),
- des échangeurs liquide-vapeur (26,34)
- des évaporateurs d'anti-sublimation (39, 40),
- des détendeurs (24, 31, 41, 42).

**14.** Système selon la revendication 13 ; ledit système comprenant en outre :

- une enceinte fermée (39, 40) parcourue par un circuit dans lequel circule un mélange de fluides frigorigènes ;

  la pression et la température dans ladite enceinte fermée évoluant jusqu'au point triple du dioxyde de carbone, au fur et à mesure que :

• le mélange de fluides frigorigènes, en se sous-refroidissant, apporte dans ladite enceinte des calories,
• ledit dioxyde de carbone passe de l'état solide à l'état liquide.

**15.** Système selon la revendication 14 ; ledit système étant tel que le mélange de fluides frigorigènes assure successivement la fusion du dioxyde de carbone dans ladite enceinte fermée et l'anti-sublimation du dioxyde de carbone circulant en circuit ouvert dans une enceinte symétrique de la précédente ; la fusion et l'anti-sublimation du dioxyde de carbone étant alternativement réalisées dans l'une et l'autre desdites enceintes (39, 40), l'une fermée, l'autre ouverte.

**16.** Système selon l'une quelconque des revendications 14 ou 15 ; ledit système comprenant en outre :

- des moyens de stockage, notamment un réservoir fixe (49) et/ou amovible (51) pour stocker le dioxyde de carbone sous forme liquide.

**17.** Système selon la revendication 16 ; ledit système étant tel que lesdits moyens de stockage du dioxyde de carbone sous forme liquide dans un réservoir fixe (49) et/ou amovible (51) comprennent en outre des moyens d'aspiration, notamment une pompe pneumatique (48) pour :

- aspirer le dioxyde de carbone liquide contenu dans ladite enceinte fermée (39, 40),
- ramener la pression dans ladite enceinte fermée (39, 40) à une pression proche de la pression atmosphérique,
- transférer le dioxyde de carbone liquide dans ledit réservoir (49).

**18.** Système selon l'une quelconque des revendications 13 à 17 ; ledit système comprenant en outre :

- des moyens de compression et/ou d'aspiration (57, 59) pour rejeter l'azote à l'air extérieur après extractions successives des vapeurs d'eau et de dioxyde de carbone contenues dans lesdites fumées.

**19.** Système selon la revendication 18 ; ledit système comprenant en outre :

- des moyens de transfert (55, 13) pour transférer les frigories contenues dans l'azote rejeté à l'air extérieur aux fumées et de contribuer ainsi au refroidissement desdites fumées.

**20.** Système selon l'une quelconque des revendications 13 à 19 ; ledit système comprenant en outre :

- des moyens de récupération (6, 7, 8, 9, 10) de l'énergie calorifique disponible dans lesdites fumées pour refroidir, sans fourniture additionnelle d'énergie, lesdites fumées jusqu'à la température d'anti-sublimation du dioxyde de carbone à une pression sensiblement égale à la pression atmosphérique.

**21.** Système selon la revendication 20 ; ledit système étant tel que lesdits moyens de récupération (6, 7, 8, 9, 10) de l'énergie calorifique disponible dans lesdites fumées comprennent :

- des moyens de réchauffage, notamment un échangeur (6), pour réchauffer et vaporiser l'eau au moyen desdites fumées et pour produire de la vapeur d'eau sous pression,
- des moyens de détente, notamment une turbine (7), pour détendre ladite vapeur d'eau sous pression et produire de l'énergie mécanique ou électrique (10).

22. Système selon l'une quelconque des revendications 13 à 21 ; lesdits moyens pour refroidir lesdites fumées à une pression sensiblement égale à la pression atmosphérique à une température telle que le dioxyde de carbone passe directement de l'état vapeur à l'état solide via un processus d'anti-sublimation comprenant en outre :

- des moyens d'extraction, notamment des échangeurs (11, 25), pour extraire desdites fumées l'eau sous forme liquide à une pression sensiblement égale à la pression atmosphérique.

23. Système selon la revendication 22 ; ledit système étant tel que lesdits moyens d'extraction pour extraire desdites fumées tout ou partie de l'eau sous forme liquide à une pression sensiblement égale à la pression atmosphérique comprennent un échangeur à air ou à eau (11).

24. Système selon la revendication 23 ; ledit système étant tel que lesdits moyens d'extraction pour extraire l'intégralité des quantités d'eau résiduelles dans lesdites fumées comprennent un échangeur frigorifique (25) et/ou un déshydrateur (56).

**Claims**

1. A method for extracting carbon dioxide from the fumes derived from the combustion of hydrocarbons in an apparatus designed in particular for the production of mechanical energy;
   said method comprising the step of cooling said fumes at a pressure more or less equal to atmospheric pressure at a temperature such that the carbon dioxide passes directly from the vapor state to the solid state via an anti-sublimation process;
   said method being **characterized in that**, to cool the mixture of nitrogen and carbon dioxide:

   negative calories are supplied by means of a fractionated distillation, at decreasing, multi-state temperatures, of a mixture of refrigerant fluids according to a cycle comprising a compression phase and successive condensation and evaporation phases.

2. Method in accordance with claim 1, wherein the step of cooling said fumes at a pressure more or less equal to atmospheric pressure at a temperature such that the carbon dioxide passes directly from the vapor state to the solid state via an anti-sublimation process is followed by:

   a step of melting the carbon dioxide in a closed chamber; the pressure and temperature in said closed chamber progressing up to the triple point of carbon dioxide, as the mixture of refrigerant fluids, while subcooling, supplies calories in said chamber.

3. Method in accordance with claim 2, wherein the mixture of refrigerant fluids successively ensures the melting of the carbon dioxide in said closed chamber and the anti-sublimation of the carbon dioxide circulating in an open circuit in a chamber symmetrical to the above one, the melting and anti-sublimation of the carbon dioxide being alternately carried out in one and the other of said chambers, one closed, the other open.

4. Method in accordance with any of the claims 2 or 3, said method additionally comprising:

   the step of storing the carbon dioxide in liquid form in a removable reservoir.

5. Method in accordance with claim 4, wherein the step of storing the carbon dioxide in liquid form in the removable reservoir comprises the following steps:

   suctioning the liquid carbon dioxide contained in said closed chamber,
   restoring the pressure in said closed chamber to a pressure close to atmospheric pressure, and

transferring the liquid carbon dioxide into said reservoir.

6. Method in accordance with any of the claims 1 through 5, said method additionally comprising:

   the step of discharging nitrogen to the outer air after successive extractions of water and carbon dioxide vapors contained in said fumes.

7. Method in accordance with claim 6, said method additionally comprising:

   the step of transferring the negative calories contained in the nitrogen discharged to the outer air to the fumes and thus contributing to the cooling of said fumes.

8. Method in accordance with any of the claims 1 through 7, said method additionally comprising:

   the step of cooling said fumes to the anti-sublimation temperature of carbon dioxide at a pressure more or less equal to atmospheric pressure, using the heat energy available in said fumes without additional supply of energy.

9. Method in accordance with claim 8, wherein, to use the heat energy available in said fumes, said method additionally comprises the following steps:

   reheating and then of vaporizing the water by means of said fumes to produce water vapor under pressure, releasing said water vapor under pressure into a turbine that produces either mechanical or electric energy.

10. Method in accordance with any of the claims 1 through 9, wherein the step of cooling said fumes at a pressure more or less equal to atmospheric pressure at a temperature such that the carbon dioxide passes directly from the vapor state to the solid state via an ante-sublimation process additionally comprises:

    the step of extracting water from said fumes in liquid form at a pressure more or less equal to atmospheric pressure.

11. Method in accordance with claim 10, wherein an air or water exchanger is used to extract all or part of the water from said fumes in liquid form at a pressure more or less equal to atmospheric pressure.

12. Method in accordance with claim 11, said method additionally comprising:

    the step of extracting the entire residual quantities of water in said fumes, using at least one of a refrigerating exchanger and a dehydrator.

13. System for extracting carbon dioxide from the fumes derived from the combustion of hydrocarbons in an apparatus designed for the production of mechanical energy;
    said system comprising cooling means for cooling said fumes at a pressure more or less equal to atmospheric pressure at a temperature such that the carbon dioxide passes directly from the vapor state to the solid state via an anti-sublimation process;
    said system being **characterized in that**:

    said cooling means for cooling said fumes at a pressure more or less equal to atmospheric pressure at a temperature such that carbon dioxide passes directly from the vapor state to the solid state via an anti-sublimation process additionally comprise an integrated, cascaded refrigerating apparatus (18, 22, 25, 26, 28, 32, 33, 34, 39, 40) to cool the mixture of nitrogen and carbon dioxide by supplying negative calories by means of a fractionated distillation, at decreasing, multistage temperatures, of a mixture of refrigerant fluids according to a cycle comprising a compression phase (17) and successive condensation and evaporation phases;
    said refrigerating apparatus comprising:

    a compressor (17),
    a partial condenser (18),
    a separator reservoir (28),
    evaporation condensers (22, 32),

fume cooling evaporators (25, 33),
liquid-vapor exchangers (26, 34),
anti-sublimation evaporators (39, 40), and
pressure reducing valves (24, 31, 41, 42).

**14.** System in accordance with claim 13, said system additionally comprising:

a closer chamber (39, 40) passed through by a circuit in which a mixture of refrigerant fluids circulates;
the pressure and temperature in said closed chamber progressing up to the triple point of carbon dioxide, as:

the mixture of refrigerant fluids, while subcooling, supplies calories in said chamber,
said carbon dioxide passes from the solid state to the liquid state.

**15.** System in accordance with claim 14, wherein said mixture of refrigerant fluids successively ensures the melting of the carbon dioxide in said closer chamber and the anti-sublimation of the carbon dioxide circulating in open circuit in a chamber symmetrical to the above one, the melting and anti-sublimation of the carbon dioxide being alternately carried out in one and the other of said chamber (39, 40), one closed, the other open.

**16.** System in accordance with any of the claims 14 or 15, said system additionally comprising:

storage means, in particular at least one of a fixed reservoir (49) and a removable (51) reservoir for storing the carbon dioxide in liquid form.

**17.** System in accordance with claim 16, wherein said means for storing carbon dioxid in liquid form in the at least one of the fixed reservoir (59) and the removable reservoir (51) comprise additionally a pneumatic pump (48) for:

suctioning the liquid carbon dioxide contained in said closer chamber (39, 40),
restoring the pressure in said closed chamber (39, 40) at a pressure close to atmospheric pressure,
transferring the liquid carbon dioxide into said reservoir (49).

**18.** System in accordance with any of the claims 13 through 17, said system additionally comprising:

at least one of compression means and suction means (57, 59) for discharging nitrogen to the outer air after successive extractions of water and carbon dioxide vapors contained in said fumes.

**19.** System in accordance with claim 18, said system additionally comprising:

transfer means (55, 13) for transferring the negative calories contained in the nitrogen discharged to the outer air to the fumes and thus contributing to the cooling of said fumes.

**20.** System in accordance with any of the claims 13 through 19, said system additionally comprising:

means (6, 7, 8, 9, 10) for recovering the heat energy available in said fumes for cooling, without the additional supply of energy, said fumes to the anti-sublimation temperature of carbon dioxide at a pressure more or less equal to atmospheric pressure.

**21.** System in accordance with claim 20, wherein said means (6, 7, 8, 9, 10) for recovering the heat energy available in said fumes comprise:

an exchanger (6), for reheating and vaporizing the water by means of said fumes and for producing water vapor under pressure,
a turbine (7), for releasing said water vapor under pressure and producing the mechanical or electric energy (10),

**22.** System in accordance with any of the claims 13 through 21, wherein said means for cooling said fumes at a pressure more or less equal to atmospheric pressure at a temperature such that the carbon dioxide passes directly from the vapor state to the solid state via an anti-sublimation process additionally comprising:

exchangers (11, 25), for extracting water from said fumes in liquid form at a pressure more or less equal to atmospheric pressure.

23. System in accordance with claim 22, wherein said exchangers comprise at least one of an air exchanger and a water exchanger (11).

24. System in accordance with claim 23, wherein said extracting means for extracting the entire residual quantities of water in said fumes comprise at least one of a refrigerating exchanger (25) and a dehydrator (56).

**Patentansprüche**

1. Verfahren zur Entfernung von Kohlendioxid aus Rauchgasen, die aus der Verbrennung von Kohlenwasserstoffen stammen, in einer Vorrichtung, die insbesondere zur Erzeugung mechanischer Energie bestimmt ist,
   wobei das Verfahren den Schritt der Abkühlung der Rauchgase bei einem Druck im wesentlichen gleich dem Atmosphärendruck auf eine Temperatur umfasst, bei welcher das Kohlendioxid durch einen Prozess der Desublimation unmittelbar vom dampfförmigen in den festen Zustand übergeht,
   wobei das Verfahren **dadurch gekennzeichnet ist, dass** zum Abkühlen des Gemisches aus Stickstoff und Kohlendioxid:

   - Kühlenergie mittels fraktionierter Destillation eines Gemisches aus Kältefluiden bei stufenweise abnehmenden Temperaturen in einem Zyklus bereitgestellt wird, der eine Kompressionsphase und Phasen der Kondensation und nachfolgender Verdampfung umfasst.

2. Verfahren nach Anspruch 1, wobei sich an den Verfahrensschritt, der darin besteht, Rauchgase durch einen Prozess der Desublimation bei einem Druck im wesentlichen gleich dem Atmosphärendruck auf eine Temperatur abzukühlen, bei der das Kohlendioxid unmittelbar vom dampfförmigen in den festen Zustand übergeht, ein Verfahrensschritt zur Fusion des Kohlendioxids in einem abgeschlossenen Raum anschließt, wobei sich der Druck und die Temperatur in dem abgeschlossenen Raum in dem Maße bis zum Dreiphasenpunkt des Kohlendioxids entwickeln, wie das Gemisch aus Kältefluiden durch seine Unterkühlung dem Raum kalorische Energie zuführt.

3. Verfahren nach Anspruch 2, bei dem das Gemisch aus Kältefluiden nacheinander zur Fusion des Kohlendioxids in dem abgeschlossenen Raum und zur Desublimation des Kohlendioxids dient, das in einem offenen Kreislauf in einem Raum zirkuliert, der symmetrisch zum vorhergehenden ist, wobei die Fusion und die Desublimation des Kohlendioxids abwechselnd in dem einen und in dem anderen der Räume durchgeführt werden, wobei der eine abgeschlossen und der andere offen ist.

4. Verfahren nach einem der Ansprüche 2 oder 3, das ferner den Verfahrensschritt umfasst, bei dem das Kohlendioxid in flüssiger Form in einem insbesondere abnehmbaren Behälter gespeichert wird.

5. Verfahren nach Anspruch 4, bei dem zum Speichern des Kohlendioxids in flüssiger Form in einem insbesondere abnehmbaren Behälter folgende Verfahrensschritte vorgesehen sind:

   - Ansaugen des flüssigen Kohlendioxids, das in dem abgeschlossenen Raum enthalten ist,
   - Zurückführen des Drucks in dem abgeschlossenen Raum auf einen Druck nahe dem Atmosphärendruck,
   - Überführung des flüssigen Kohlendioxids in den Behälter.

6. Verfahren nach einem der Ansprüche 1 bis 5, ferner mit dem Verfahrensschritt der Abgabe von Stickstoff an die Außenluft nach aufeinander folgenden Entfernungen der in den Rauchgasen enthaltenen Wasser- und Kohlendioxiddämpfe.

7. Verfahren nach Anspruch 6, ferner mit dem Verfahrensschritt, bei dem die in dem zur Außenluft hin abgegebenen Stickstoff enthaltene Kälteenergie den Rauchgasen zugeführt und somit zur Abkühlung der Rauchgase herangezogen wird.

8. Verfahren nach einem der Ansprüche 1 bis 7, ferner mit dem Verfahrensschritt, bei dem die Rauchgase bei einem Druck im wesentlichen gleich dem Atmosphärendruck auf die Desublimationstemperatur des Kohlendioxids abgekühlt werden, wobei die in den Rauchgasen verfügbare Wärmeenergie ohne zusätzliche Energiezufuhr genutzt wird.

9. Verfahren nach Anspruch 8, das ferner zur Nutzung der in den Rauchgasen verfügbaren Wärmeenergiefolgende Verfahrensschritte aufweist:

   - den Schritt, bei dem Wasser mittels der Rauchgase erwärmt und dann verdampft wird, um unter Druck stehenden Wasserdampf zu erzeugen,
   - den Schritt, bei dem der unter Druck stehende Wasserdampf in einer Turbine entspannt wird, die mechanische oder elektrische Energie erzeugt.

10. Verfahren nach einem der Ansprüche 1 bis 9, bei dem der Verfahrensschritt zur Abkühlung der Rauchgase bei einem Druck im gleich dem Atmosphärendruck auf eine Temperatur, bei der das Kohlendioxid über einen Prozess der Desublimation unmittelbar vom dampfförmigen in den festen Zustand übergeht, ferner den Schritt umfasst, bei dem Wasser in flüssiger Form bei einem Druck im wesentlichen gleich dem Atmosphärendruck aus den Rauchgasen entfernt wird.

11. Verfahren nach Anspruch 10, bei dem zur teilweisen oder vollständigen Entfernung des Wassers in flüssiger Form aus den Rauchgasen bei einem Druck im wesentlichen gleich dem Atmosphärendruck ein Luft- oder Wassertauscher verwendet wird.

12. Verfahren nach Anspruch 11, das ferner den Schritt zur Entfernung der Gesamtheit der in den Rauchgasen verbliebenen Wassermengen durch Einsatz eines Kältetauschers und/oder einer Dehydratisiervorrichtung umfasst.

13. System zur Entfernung von Kohlendioxid aus Rauchgasen, die aus der Verbrennung von Kohlenwasserstoffen stammen, in einer Vorrichtung, die insbesondere zur Erzeugung von mechanischer Energie bestimmt ist,
    wobei das System Kühlmittel zur Abkühlung der Rauchgase bei einem Druck im wesentlichen gleich dem Atmosphärendruck auf eine Temperatur umfasst, bei der Kohlendioxid über einen Prozess der Desublimation unmittelbar vom dampfförmigen in den festen Zustand übergeht,
    wobei das System **dadurch gekennzeichnet ist, dass**
    die Kühlmittel zur Abkühlung der Rauchgase bei einem Druck im wesentlichen gleich dem Atmosphärendruck auf eine Temperatur, bei der das Kohlendioxid durch einen Prozess der Desublimation unmittelbar vom dampfförmigen in den festen Zustand übergeht, ferner eine Kühlvorrichtung mit integrierter Kaskade (18, 22, 25, 26, 28, 32, 33, 34, 39, 40) umfassen, um das Gemisch aus Stickstoff und Kohlendioxid mittels fraktionierter Destillation eines Gemisches aus Kältefluiden bei stufenweise abnehmenden Temperaturen in einem Zyklus abzukühlen, der eine Kompressionsphase (17) und Phasen der Kondensation und nachfolgender Verdampfung umfasst,
    wobei die Kühlvorrichtung folgende Merkmale aufweist:

    - einen Kompressor (17),
    - einen Partialkondensator (18),
    - einen Trennbehälter (28),
    - Verdampfer-Kondensatoren (22, 32),
    - Verdampfer (25, 33) zur Abkühlung von Rauchgasen,
    - Flüssigkeits-Dampf-Tauscher (26, 34),
    - Desublimationsverdampfer (39, 40) und
    - Reduzierventile (24, 31, 41, 42).

14. System nach Anspruch 13, mit:

    - einem abgeschlossenen Raum (39, 40), der von einem Kreislauf durchsetzt wird, in dem ein Gemisch von Kältefluiden zirkuliert,

    wobei sich der Druck und die Temperatur in dem abgeschlossenen Raum in dem Maße bis zum Dreiphasenpunkt des Kohlendioxids entwickeln, wie

    • das Gemisch aus Kältefluiden durch seine Unterkühlung dem Raum kalorische Energie zuführt,
    • das Kohlendioxid vom festen in den flüssigen Zustand übergeht.

15. System nach Anspruch 14, bei dem das Gemisch aus Kältefluiden nacheinander zur Fusion des Kohlendioxids in dem abgeschlossenen Raum und zur Desublimation des Kohlendioxids dient, das im offenen Kreislauf in einem Raum zirkuliert, der zum vorhergehenden symmetrisch ist, wobei die Fusion und die Desublimation des Kohlendioxids abwechselnd in dem einem und dem anderen der Räume (39, 40) durchgeführt werden, wobei der eine abgeschlossen und der andere offen ist.

16. System nach einem der Ansprüche 14 oder 15, ferner mit:

- Speichermitteln, insbesondere einem fest angebrachten (49) und/oder abnehmbaren (51) Behälter zum Speichern von Kohlendioxid in flüssiger Form.

17. System nach Anspruch 16, bei dem die Mittel zum Speichern von Kohlendioxid in flüssiger Form in einem fest angebrachten (49) und/oder abnehmbaren (51) Behälter ferner Ansaugmittel, insbesondere eine Druckluftpumpe (48), aufweisen, um:

- das in dem abgeschlossenen Raum (39, 40) enthaltene, flüssige Kohlendioxid anzusaugen,
- den Druck in dem abgeschlossenen Raum (39, 40) auf einen Druck nahe dem Atmosphärendruck zurück zu führen,
- das flüssige Kohlendioxid in den Behälter (49) zu überführen.

18. System nach einem der Ansprüche 13 bis 17, ferner mit:

- Kompressions- und/oder Ansaugmitteln (57, 59), um den Stickstoff nach aufeinander folgenden Entfernungen der in den Rauchgasen enthaltenen Wasser- und Kohlendioxiddämpfe an die Außenluft abzugeben.

19. System nach Anspruch 18, ferner mit Übertragungsmitteln (55, 13) zur Übertragung der Kälteenergie, die in dem an die Außenluft abgegebenen Stickstoff enthalten ist, an die Rauchgase, um somit zur Abkühlung der Rauchgase beizutragen.

20. System nach einem der Ansprüche 13 bis 19, ferner mit:

- Mitteln (6, 7, 8, 9, 10) zur Rückgewinnung der in den Rauchgasen verfügbaren Wärmeenergie, um die Rauchgase ohne zusätzliche Energiezufuhr bei einem Druck im wesentlichen gleich dem Atmosphärendruck auf die Desublimationstemperatur des Kohlendioxids abzukühlen.

21. System nach Anspruch 20, bei dem die Mittel (6, 7, 8, 9, 10) zur Rückgewinnung der in den Rauchgasen verfügbaren Wärmeenergie folgende Merkmale umfassen:

- Heizmittel, insbesondere einen Tauscher (6), um Wasser mittels der Rauchgase zu erwärmen und zu verdampfen und unter Druck stehenden Wasserdampf zu erzeugen,
- Druckminderungsmittel, insbesondere eine Turbine (7), um den unter Druck stehenden Wasserdampf zu entspannen und mechanische oder elektrische Energie (10) zu erzeugen.

22. System nach einem der Ansprüche 13 bis 21, bei dem die Mittel zur Abkühlung der Rauchgase bei einem Druck im wesentlichen gleich dem Atmosphärendruck auf eine Temperatur, bei der das Kohlendioxid durch einen Prozess der Desublimation unmittelbar vom dampfförmigen in den festen Zustand übergeht, ferner folgende Merkmale aufweisen:

- Extraktionsmittel, insbesondere Tauscher (11, 25), um bei einem Druck im wesentlichen gleich dem Atmosphärendruck das Wasser in flüssiger Form aus den Rauchgasen zu entfernen.

23. System nach Anspruch 22, bei dem die Extraktionsmittel zur vollständigen oder teilweisen Entfernung des Wassers in flüssiger Form aus den Rauchgasen bei einem Druck im wesentlichen gleich dem Atmosphärendruck einen Luft- oder Wassertauscher (11) umfassen.

24. System nach Anspruch 23, bei dem die Extraktionsmittel zum Entfernen der Gesamtheit der in den Rauchgasen verbliebenen Wassermengen einen Kältetauscher (25) und/oder eine Dehydratisiervorrichtung umfassen.

# FIG_1

Pression

Phase liquide

Point critique

Courbe de vaporisation

Courbe de fusion

Phase solide

Phase vapeur

Point triple

Courbe de sublimation

Température

FIG_2

EP 1 355 716 B1

FIG_3